(19) Europäisches Patentamt
European Patent Office
Office européen des brevets

(11) **EP 3 663 187 A2**

(12) **EUROPÄISCHE PATENTANMELDUNG**

(43) Veröffentlichungstag:
**10.06.2020 Patentblatt 2020/24**

(51) Int Cl.:
**B63B 35/32** (2006.01) **E02B 15/10** (2006.01)

(21) Anmeldenummer: **19209732.7**

(22) Anmeldetag: **18.11.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.12.2018 DE 102018131113**

(71) Anmelder: **ConVi GmbH**
**89257 Illertissen (DE)**

(72) Erfinder:
- **Seidl, Markus**
**89257 Illertissen (DE)**
- **Marschalik, Claudius**
**8702 Zollikon (CH)**

(74) Vertreter: **Dr. Binder & Binder GbR**
**Neue Bahnhofstraße 16**
**89335 Ichenhausen (DE)**

(54) **WASSERFAHRZEUG**

(57) Die Erfindung betrifft ein Wasserfahrzeug (1), aufweisend:

- einen oder mehrere untereinander verbundene Rümpfe (2) mit Decksaufbauten, wobei zumindest der mindestens eine Rumpf (2) überwiegend aus einem Faserverbundwerkstoff aufgebaut ist,

- einen Antrieb (6) zur Erzeugung eines Vortriebs auf dem Wasser,

- ein Sende- und Empfangssystem (7) zum verschlüsselten Datenaustausch mit einer entfernten Gegenstation,

- ein Sensorsystem (8), das mit dem Prozessorsystem (9) zusammenwirkt, um eine unbemannte Fahrt des Wasserfahrzeuges (1) auf See zu ermöglichen,

- und ein Prozessorsystem (9) mit Speicher (9.1) und darin gespeichertem Programmcode, welcher im Betrieb die Steuerung auf See ausführt, wobei das Prozessorsystem (9) eine Datenverbindung zu dem vorgenannten mindestens einen Sende- und Empfangssystem (7) und zu dem mindestens einen Sensorsystem (8) aufweist.

FIG 9

EP 3 663 187 A2

FIG 9

**Beschreibung**

Die Erfindung betrifft ein Wasserfahrzeug mit einem oder mehreren untereinander verbundenen Rümpfen mit Decksaufbauten, einem Antrieb, einem Sende- und Empfangssystem zum Datenaustausch mit einer entfernten Gegenstation, ein Sensorsystem, das mit dem Prozessorsystem zusammenwirkt, um eine unbemannte Fahrt des Wasserfahrzeuges auf See zu ermöglichen.

Unbemannte und ferngesteuerte Wasserfahrzeuge sind allgemein bekannt. Allerdings ist deren bekannte Ausrüstung nicht ausreichend, um sie für anspruchsvolle Aufgaben und Missionsprofile, wie SAR-Aufgaben (SAR = search and rescue), Überwachungsaufgaben, Transportdienste für Waren und Personen, also Zustelldienste beziehungsweise Taxidienste, sowie für Umweltaufgaben, wie beispielsweise das automatische Einsammeln von Müll, insbesondere Kunststoffmüll, auf dem Wasser, insbesondere auf dem offenen Meer oder ähnliches, einzusetzen.

Es ist Aufgabe der Erfindung, ein verbessertes Wasserfahrzeug zur Verfügung zu stellen, welches für unbemannte Missionsprofile unterschiedlicher Art geeignet ist.

Diese Aufgabe wird durch die Merkmale der unabhängigen Patentansprüche gelöst. Vorteilhafte Weiterbildungen der Erfindung sind Gegenstand untergeordneter Ansprüche.

Demgemäß schlägt der Erfinder ein Wasserfahrzeug vor, welches einen oder mehrere untereinander verbundene Rümpfe mit Decksaufbauten aufweist. Vorzugsweise handelt es sich dabei um einen Einrümpfer oder Monohull. Alternativ kann es allerdings auch ein Mehrrumpfboot, wie ein Katamaran oder Trimaran, ebenfalls im Rahmen der Erfindung, sein. Auf jeden Fall soll der Rumpf oder die Rümpfe überwiegend aus einem Faserverbundwerkstoff aufgebaut sein, um ausreichende Stabilität bei gleichzeitig geringem Gewicht zu gewährleisten. Insbesondere ist es hierbei von besonderem Vorteil, wenn als Fasermaterial eine Kohlefaser verwendet wird, da hierbei gegenüber einer Aluminiumbauweise bis zu 30% Gewichtseinsparung möglich ist. Hierdurch kann bei gleicher Bootsgröße die Zuladung beträchtlich erhöht werden und/oder mehr Ausrüstung verbaut und/oder befördert werden oder auch die Reichweite verbessert werden, da eine größere Menge Treibstoff geladen werden kann. Schließlich bietet diese Bauweise auch noch den Vorteil eines reduzierten RADAR-Querschnittes an, der bei besonderen Einsatzgebieten vorteilhaft sein kann. Selbstverständlich soll das erfindungsgemäße Wasserfahrzeug einen Antrieb zur Erzeugung eines notwendigen Vortriebs auf dem Wasser aufweisen.

Erfindungsgemäß verfügt das Wasserfahrzeug auch über ein Sende- und Empfangssystem, welche dazu geeignet und ausgerüstet ist, einen, insbesondere verschlüsselten, Datenaustausch mit einer entfernten Gegenstation auszuführen. Weiterhin soll an Bord mindestens ein Sensorsystem vorliegen, welches mit einem an Bord befindlichen Prozessorsystem zusammenwirkt, um eine unbemannte Fahrt des Wasserfahrzeuges auf See zu ermöglichen, wobei das mindestens eine Prozessorsystem mit einem Speicher ausgestattet ist und ein darin gespeicherter Programmcode im Betrieb zumindest die Steuerung auf See ausführt. Insbesondere weist das Prozessorsystem auch eine Datenverbindung zu dem vorgenannten mindestens einen Sende- und Empfangssystem und zu dem mindestens einen Sensorsystem auf, wobei die damit zum Prozessorsystem geleiteten Informationen aus der mindestens einen Sende- und Empfangseinrichtung und dem mindestens einen Sensorsystem für die unbemannte Fahrzeugführung ausgewertet wird. Dies kann insbesondere zum automatischen oder halbautomatischen Ausweichen von Hindernissen oder für die automatische oder halbautomatische Routen- und/oder Zielführung verwendet werden.

In einer vorteilhaften Ausführung des Wasserfahrzeuges wird vorgesehen, dieses zumindest seitlich und am Bug des mindestens einen Rumpfes mit einem umlaufenden Gummiwulst auszustatten, vorzugsweise kann der Gummiwulst aufblasbar in Art eines Schlauchbootwulstes ausgebildet werden. Damit wird erreicht, dass - zumindest im Falle des Schlauchbootwulstes - einerseits eine zusätzliche Auftriebshilfe am Rumpf vorliegt und andererseits bei einer Annäherung an andere Boote, Stege oder sonstige massive Einrichtungen auf das Ausbringen von Fendern zum mechanischen Schutz des Bootsrumpfes verzichtet werden kann. Dies ist insbesondere bei unbemannten Fahrten wichtig, da sich an Bord kein Personal befindet, welches solche Fender ausbringen könnte. Weiterhin ist ein solcher umlaufender Wulst auch besonders günstig, wenn Personen aus der See, insbesondere stark bewegter See, geborgen werden sollen, da hierdurch für diese weniger Verletzungsgefahr besteht.

In einer weiteren Ausführung des erfindungsgemäßen Wasserfahrzeuges, insbesondere zur Verwendung der SAR-Aufgaben (SAR = search and rescue), wird vorgeschlagen, dieses mit einer Anzahl von Halterungen mit automatisch auswerfbaren Rettungsinseln auszustatten, wobei die Personenzahl, für die die Rettungsinseln bestimmungsgemäß ausgerüstet sind, die Anzahl der an Bord des Wasserfahrzeuges befindlichen Personen wesentlich übersteigt, vorzugsweise mindestens zwei, vorzugsweise sechs oder acht, Rettungsinseln mit 6 bis 12 Personen pro Rettungsinsel. Hierbei sollte jede Rettungsinsel über ein Auslöse- und/oder Auswurfsystem zum automatischen Aktivieren der Rettungsinsel verfügen. Weiterhin ist auch zwischen den Auslöse-/Auswurfsystemen und dem Prozessorsystem eine mechanische oder elektrische oder elektronische Verbindung, vorzugsweise eine Datenverbindung, vorgesehen, über die ein Auslöseereignis oder Auslöseimpuls oder Auslösebefehl zur individuellen Aktivierung übertragen werden kann.

Vorteilhaft kann das erfindungsgemäße Wasserfahrzeug, insbesondere wenn es für SAR-Zwecke verwendet werden soll, mit mindestens einem Bergesystem für im Wasser treibende Personen ausgestattet sein.

In einer einfachsten Variante kann bezüglich der Bergung von in Seenot geratenen Personen das Wasserfahrzeug mit einem abgesenkten Heck ausgestattet sein, welches ein an Bord gehen von im Wasser befindlichen Personen - zumindest bei geringem Seegang - erleichtert. Hier können auch zusätzliche Einstiegshilfen, wie tiefer ins Wasser reichende Leitern oder Treppen oder Netze angebracht sein, die vorzugsweise zur Benutzung separat ausgefahren und/oder ausgeschwenkt werden.

Es ist allerdings zu beachten, dass im Falle von stärkerem Wellengang das Wasserfahrzeug selbst, insbesondere dessen Heck, für im Wasser befindliche Personen aufgrund der Eigenbewegung des Fahrzeuges durch den Wellengang höchst gefährlich werden kann, da hierbei das Heck häufig weit über die Wasseroberfläche schwingt und dann wieder mit hoher Geschwindigkeit eintaucht. Befindet sich dort im Heckbereich eine im Wasser treibende Person, kann es schnell zu schweren Verletzungen kommen. Günstiger ist es daher, wenn Personen seitlich, insbesondere im Bereich des Bootsschwerpunktes, aufgenommen werden, da sich dieser Bereich weniger relativ zur Wasseroberfläche bewegt. Es werden daher nachfolgend weitere Bergesysteme vorgeschlagen, welche sich auch zur Anbringung im Seitenbereich des Wasserfahrzeuges eignen und bevorzugt auch dort positioniert werden.

Vorteilhaft ausgestattet zur Bergung von Personen aus dem Wasser ist ein Wasserfahrzeug mit mindestens einem Bergesystem, welches mindestens eine schwere, also im Salzwasser absinkende, flexible und wasserdurchlässige, vorzugsweise netzartige, Rettungsfläche zur Aufnahme einer darauf liegenden Person aufweist, wobei mindestens zwei ausfahrbare Ausleger vorliegen sollten und jeder Ausleger einerseits am Rumpf befestigt ist und mit einem Ende an der Rettungsfläche befestigt ist, sodass ein Ausfahren der Ausleger die Rettungsfläche vom Fahrzeug weg ausbreitet, sodass auf die Rettungsfläche eine zu rettende Person aufschwimmen und sich darauf legen kann.

Weiterhin ist eine Steuerung vorgesehen, welche durch Einfahren der Ausleger die auf der Rettungsfläche liegende Person an Bord, vorzugsweise in ein seitlich von der Rettungsfläche angeordnetes Kompartment oder Einbuchtung, einholt.

Alternativ oder ergänzend kann das erfindungsgemäße Wasserfahrzeug auch eine, vorzugsweise seitlich angebrachte, automatisch ausfahrbare oder ausschwenkbare Leiter aufweisen, die bei Bedarf aktiviert wird.

In einer weiteren Ausstattungsvariante des Wasserfahrzeuges mit Bergesystem wird vorgeschlagen, eine Startvorrichtung für eine Wasserdrohne vorzusehen, wobei die Wasserdrohne über ein Fangseil, vorzugsweise aus aufschwimmendem Material (=Schwimmleine), vorzugsweise mit mehreren Halteschlaufen im Fangseil, mit dem Wasserfahrzeug verbunden ist, eine Einholvorrichtung für das Fangseil vorliegt und eine Steuervorrichtung angebracht ist, welche die Wasserdrohne automatisch an eine im Wasser schwimmende/treibende Person heran oder um diese herum führt. Auf diese Weise kann einer im Wasser treibenden Person ein Seil herangeführt werden, mit dem diese Person über eine Winde eingeholt werden kann. Dabei ist es besonders günstig, wenn dieses Seil eine oder mehrere Schlaufen, vorzugsweise gepolstert mit aufschwimmendem Material zur gleichzeitigen Verwendung als Rettungsring und Schwimmhilfe, aufweist, in die die Person sich einfädeln kann. Damit ist es auch möglich, die zu rettende Person über einen Ausleger des Bootes aus dem Wasser zu heben und an Bord zu hieven.

In einer anderen vorteilhaften Ausbildung eines Bergesystems am Wasserfahrzeug kann das mindestens eine Bergesystem eine Start- und Aufnahmevorrichtung für eine Wasserdrohne, eine funkfernsteuerbare Wasserdrohne und ein Steuersystem für die Wasserdrohne aufweisen, wobei die Wasserdrohne als Scouter mit Handsteuerung ausgebildet sein kann. Wird diese als Scouter ausgebildete Wasserdrohne an eine Person herangeführt, kann die einzuholende Person den Scouter als Schwimmhilfe mit Antrieb nutzen und sich zum Wasserfahrzeug ziehen lassen.

Besonders günstig ist es, wenn das erfindungsgemäße Wasserfahrzeug über einen Jetantrieb mit mindestens zwei getrennt ansteuerbaren Wasserstrahlaustritten verfügt. Ein Jetantrieb hat den Vorteil, dass er über keine Schraube im Wasser verfügt, die zu Verletzungen bei im Wasser befindlichen Personen führt. Weiterhin kann der Jetantrieb mit beweglichen Düsen zur Vektorsteuerung und mit Schubumkehrklappen ausgestattet werden. Bei starkem Seegang entfällt auch das Problem durchdrehender Schrauben und ein Betrieb in sehr seichten Gewässern wird erleichtert, da die Gefahr von Schraubenschäden durch Bodenberührung entfällt.

Wichtig für den Rettungs-, Berge- und SAR-Einsatz ist, dass bei schlechtem Wetter, rauer See, hohem Wellengang ein Wasserfahrzeug mit JET-Antrieb als Geschwindigkeitsmaximum fast die doppelte Geschwindigkeit gegenüber einem konventionell mit Propeller angetriebenen Boot erreicht. Der damit gewonnene Zeitfaktor kann entscheidend für die Lebens-Rettung von Personen in Gewässern sein.

Entsprechend wird auch vorgeschlagen, dass mindestens ein Wasserstrahlaustritt in seiner Richtung, vorzugsweise unabhängig von anderen Wasserstrahlaustritten oder mit diesen synchronisiert, steuerbar ausgeführt ist.

Weiterhin kann mindestens ein Wasserstrahlaustritt im vorderem und mindestens ein Wasserstrahlaustritt im hinteren Schiffsbereich angeordnet werden, um eine verbesserte Manövrierbarkeit auf der Stelle zu erzeugen.

Ebenso kann mindestens ein Wasserstrahlaustritt in Fahrtrichtung vor dem Lateralschwerpunkt des Lateralplans des mindestens einen Rumpfes und mindestens ein Wasserstrahlaustritt in Fahrtrichtung nach dem Lateralschwerpunkt des Lateralplans des mindestens einen Rumpfes angeordnet werden, wodurch sich ebenfalls die Manövrierbarkeit verbessert.

Besonders günstig ist es weiterhin, wenn das erfindungsgemäße Wasserfahrzeug mit einem Hybridantrieb ausgestattet ist. Dabei wird die Antriebsleistung einerseits von einem Verbrennungsmotor (zum Beispiel: Kolbenmotor, Turbine) durch einen Brennstoff (zum Beispiel: Benzin, Diesel, Jet-Fuel, Gas, Wasserstoff) und andererseits durch einen Elektromotor mit elektrischer Energie aus einem aufgeladenen Energiespeicher erzeugt. Die Aufladung kann dabei einerseits über den Verbrennungsmotor erfolgen, jedoch auch beispielsweise durch Brennstoffzellen, Solarzellen oder Windenergie erfolgen oder zumindest unterstützt werden.

Wird das Wasserfahrzeug dann über den elektrischen Teil des Hybridantriebes angetrieben, so ermöglicht dies einen lärmfreien und umweltfreundlichen Wasserbetrieb. Ideal ist dies für SAR-Missionen, Schleichfahrten, langsames Manövrieren in Häfen, leises Fahren für die Personensuche, Bergung und Überwachung.

Durch die Hybridlösung kann wahlweise mit reinem Elektroantrieb und/oder mit dem Verbrennungsmotor gefahren werden. Beim Betrieb mit dem Verbrennungsmotor sorgt dieser für kraftvolle Beschleunigung und Geschwindigkeit. Parallel agiert ein extrem leistungsfähiger Generator als Stromerzeuger, welcher die Energiespeicher, zum Beispiel Lilon-Batteriepakete, wieder auflädt und so eine zeitlich sehr lange, zum Beispiel bis zu 50-stündige, Mission gewährleisten kann.

Der leise und energieeffiziente Elektrobetrieb ist für SAR- und Suchoperationen sehr wichtig. Zusätzlich kann das Wasserfahrzeug ohne Treibstoffverbrauch autonom auf offener See die Position halten und so das Umfeld über viele Stunden beobachten und nach Vermissten suchen, während derzeitige Techniken schon nach wenigen Stunden wegen des hohen Treibstoffverbrauches bereits in den Hafen zurück müssen.

Je nach Leistungsbedarf lässt sich durch das erfindungsgemäße Prozessorsystem die Motorensteuerung der Verwendung des Elektroantriebs oder des Verbrennungsmotors automatisiert ein- und auskoppeln. Vorteilhaft kann der Verbrennungsmotor bei Bedarf vom Elektromotor beim Beschleunigen noch zusätzlich unterstützt werden.

Ein weiterer Vorteil des Wasserfahrzeuges mit einem oder mehreren Jetantrieben, ist es, dass dieses, ohne Rücksicht auf den Antrieb nehmen zu müssen, trockenfallen kann. Es kann also in einem Gezeitengebiet bei Ebbe auf dem Grund stranden, während beim Trockenfallen oder Stranden eines konventionell angetriebenen Bootes vor allem der Antrieb und die Steuerung bruchgefährdet sind.

Gemäß einer weiteren Ausrüstungsvariante des erfindungsgemäßen Wasserfahrzeuges wird auch eine Remote-Steuerung vorgeschlagen, wobei mindestens eine Sende-Empfangseinheit dazu ausgerüstet ist, Steuersignale von einem externen Sender/Empfänger zu empfangen und zumindest Positionssignale (zum Beispiel von GPS oder INS on board) an den externen Sender/Empfänger weiterzuleiten.

Damit ist es möglich, das Wasserfahrzeug von einer Basisstation, gegebenenfalls von Land oder von einem anderen Wasserfahrzeug aus, zu steuern, wobei gleichzeitig auf die im Wasserfahrzeug ermittelten Sensor- und Zustandsdaten zugegriffen werden kann, damit in der Basisstation mit Hilfe entsprechender Darstellungen eine vor-Ort-Simulation erzeugt wird und dem fernsteuernd tätigen Personal die aktuelle Situation an Bord und in der Umgebung des Wasserfahrzeuges vermittelt wird.

Entsprechend kann mindestens eine Sende-Empfangseinheit dazu ausgerüstet sein, um telemetrische Zustands- und Situationsdaten an einen externen Sender/Empfänger weiterzuleiten.

Außerdem können Sensordaten übermittelt werden, indem mindestens eine Sende-Empfangseinheit dazu ausgerüstet ist, von dem mindestens einen Sensor stammende Sensordaten an einen externen Sender/Empfänger weiterzuleiten.

Es wird in diesem Zusammenhang darauf hingewiesen, dass grundsätzlich der hier beschriebene Funkverkehr über direkte Funkverbindungen zwischen dem Wasserfahrzeug und einer zur Steuerung und/oder Überwachung dienenden Basisstation stattfinden sollte, da hierdurch Kosten eingespart werden können. Allerdings liegt es ohne Einschränkungen auch im Rahmen der Erfindung, den beschriebenen Funkverkehr über Relaisstationen, gegebenenfalls über Satelliten, zu führen. Insbesondere bei relativ weitreichenden Missionen kann es notwendig sein, auf relativ teure Satellitenverbindungen zurückzugreifen. Dabei kann es besonders günstig sein, wenn das Wasserfahrzeug dazu ausgerüstet ist, weitgehend autonom zu fahren. Hierbei kann dem Wasserfahrzeug beispielsweise über eine Funk-, insbesondere Satellitenverbindung, eine Zielposition oder eine Route mit entsprechenden Wegepunkten übermittelt werden, wobei während der Fahrt dorthin keine ständige Datenverbindung bestehen muss, da das Wasserfahrzeug mittels einer Autopilotsteuerung selbständig fährt und hierzu mit Hilfe der unterwegs ermittelten Sensordaten - dies betrifft insbesondere auch AIS-Daten - die auf dem Fahrtwege auftauchenden Hindernisse selbständig meiden und/oder umfahren kann.

Vorteilhaft ist es weiterhin, wenn mindestens ein Sende- und Empfangssystem hard- und softwaremäßig dazu ausgerüstet ist, elektronische Positionssignale zu senden und/oder elektronische Positionssignale anderer Sender - vorzugsweise anderer beweglicher Objekte, insbesondere von anderen Wasserfahrzeugen und Personen - zu empfangen. Werden diese Positionsinformationen anderer Objekte über die vorgenannte Telemetrie übertragen, so erleichtert dies dem in der Basisstation befindlichen Personal den Überblick über die aktuelle räumliche Situation um das Wasserfahrzeug zu bewahren.

Insbesondere wird vorgeschlagen, dass das Wasserfahrzeug mindestens eine Sende-Empfangseinheit aufweist, die ein AIS-System (AIS = automativ identification system = automatisches Identifizierungssystem) ist, also empfangene AIS-Signale auswertet und auch falls gewünscht AIS-Signale, also Positions- und Fahrtdaten, sendet.

Vorteilhaft ist es weiterhin, wenn das Wasserfahrzeug mindestens eine Peilvorrichtung aufweist, mit der ein entfernter Sender, zum Beispiel eine PLB oder ein Funktelefon, angepeilt werden kann.

Günstig ist außerdem die Verwendung eines RADARs. Demgemäß wird vorgeschlagen, dass das Wasserfahrzeug mindestens eine Sende-Empfangseinheit aufweist, die als RADAR arbeitet, vorzugsweise ein RADAR mit "Active Electronically Scanned Array (=AESA)"-Technologie.

Weiterhin ist es vorteilhaft, wenn das Wasserfahrzeug an einer exponierten Position mit mindestens einem optischen Erfassungssystem ausgerüstet ist. Vorzugsweise wird das mindestens eine Sensorsystem, insbesondere das optische Erfassungssystem, lagestabilisiert ausgeführt beziehungsweise auf einer lagestabilisierten Plattform montiert.

Zur Verbesserung der Reichweite des oder der jeweils vorliegenden Sensorsysteme wird ergänzend vorgeschlagen, das Wasserfahrzeug mit einem Teleskopmast auszustatten und dieses mindestens eine Sensorsystem, insbesondere das optische Erfassungssystem, auf diesem Teleskopmast anzuordnen. Vorteilhaft ist dabei, wenn der Teleskopmast in seiner Länge variabel ausgefahren beziehungsweise gesteuert werden kann, so dass die Länge des Teleskopmastes beispielsweise so reguliert werden kann, dass eine optimale Rundumsicht erreicht wird, aber die Bewegung in Grenzen gehalten wird. Für besondere Missionen ist es dabei günstig, dass bei bewegter See der Bootsrumpf weitgehend von Wellen verdeckt bleibt, während lediglich die Spitze des Teleskopmastes mit der dort befindlichen lagestabilisierten Plattform und den Sensoren aus dem Wellengeschehen herausragt.

Besonders vorteilhaft ist es, wenn als optisches Erfassungssystem ein zumindest auch im Infrarotbereich arbeitendes System verwendet wird. Besonders bevorzugt kann es sich dabei um einen IR-Linescanner (=IR-Linienkamera) handeln.

Eine andere vorteilhafte Ausrüstung des Wasserfahrzeuges besteht darin, dass mindestens ein Lagestabilisierungssystem im Bootsrumpf verbaut ist. Hierbei wird darauf hingewiesen, dass dieses Lagestabilisierungssystem nicht eine Geräteplattform stabilisiert, wie oben beschrieben, sondern das Wasserfahrzeug selbst. Insbesondere bei einer Ausführung als Monohull neigt ein Wasserfahrzeug in bewegter See stets zu Roll- und Nickbewegungen. Gerade die Rollbewegungen, also Drehbewegungen um die Längsachse des Rumpfes, sind dabei besonders stark. Wird das Fahrzeug mit einem Teleskopmast als Träger für Sensorsysteme ausgerüstet, ist es von besonderem Vorteil, wenn durch ein Lagestabilisierungssystem die über den langen Hebelarm eines Teleskopmastes verstärkten Rollbewegungen des Rumpfes reduziert werden.

Einerseits kann relativ niederfrequentes Rollen kompensiert werden, indem im Wasserfahrzeug mindestens zwei seitlich der Bootsmittellinie angeordnete Tanks mit dazwischengeschaltetem Pumpsystem verbaut sind, wobei das Pumpsystem elektronisch gesteuert aus den Daten des mindestens einen Lagesensors beginnende Rollbewegungen detektiert und diesen Bewegungen durch umpumpen von Flüssigkeit in den Tanks entgegenwirkt. Als Nebeneffekt kann hiermit auch ein Ladungsausgleich erreicht werden, so dass auch bei einseitiger Ladung das Boot aufrecht gehalten wird.

Zur Stabilisierung eines höherfrequenten Rollens eignet sich allerdings ein Kreisel in besonderem Maße. Demgemäß wird vorgeschlagen, das Wasserfahrzeug mit mindestens einem Kreiselsystem, das im Rumpf verbaut ist, auszurüsten, wobei der Kreisel derart angeordnet und verbaut ist, dass seine Rotationsachse senkrecht zur Achse der zu stabilisierenden Rollbewegung ausgerichtet ist, die Lagerung des Kreisels halbkardanisch quer zur Rollachse aufgehängt ist und zur Dämpfung der Präzession und Nutation der Kreiselachse vorzugsweise ein Dämpfer zwischen der Kreisellagerung und dem Bootsrumpf angebracht ist.

Hierbei wird die allgemein bekannte lagestabilisierende Wirkung eines schnell drehenden und schweren Kreisels genutzt. Dabei wird ein Käfig oder Gehäuse in dem wiederum der Kreisel selbst gelagert ist, so halbkardanisch gelagert mit dem Rumpf verbunden, dass die Achse der halbkardanischen Aufhängung quer zur Rumpflängsachse angeordnet ist und der Käfig mit dem darin gelagerten Kreisel bei Nickbewegungen des Rumpfes nicht ausgelenkt wird. Im Käfig wird der Kreisel im Wesentlichen senkrecht stehend gelagert, so dass eine Rollbewegung des Rumpfes die Kreiselachse seitlich auslenkt. Wird ein um eine Kreiselachse schnell rotierender Kreisel an der Kreiselachse seitlich ausgelenkt, so erzeugt der Kreisel an der Kreiselachse eine starke Gegenkraft und beginnt mit einer Präzessionsbewegung, das heißt, die Kreiselachse beschreibt eine im Wesentlichen kegelförmige Bewegung um die unausgelenkte Drehachse. Hinzu kommt noch eine Nutationsbewegung, die eine annähernd sinusförmige Überlagerung der Präzessionsbahn der Kreiselachse darstellt. Zur Dämpfung von Präzession und Nutation kann ein oder mehrere Dämpfungselemente zwischen dem Käfig und dem Rumpf angeordnet werden. Mit dieser Anordnung wirkt die lagehaltende Wirkung des Kreisels hauptsächlich auf die höherfrequenten Rollbewegungen des Rumpfes und reduziert diese je nach Trägheitsmoment und Rotationsgeschwindigkeit des eingesetzten Kreisels. Langfristige Lageänderungen, zum Beispiel durch ungleiche Beladung oder dauernden einseitigen Windeinfluss, können damit allerdings weniger ausgeglichen werden. Selbstverständlich ist dabei, dass der Kreisel selbst über einen entsprechenden Antrieb verfügen muss, damit die gewünschte schnelle Rotation im Betrieb erreicht wird und der gewünschte Kreiseleffekt eintritt.

Grundsätzlich kann das oben beschriebene Wasserfahrzeug auch zur unbemannten, also fahrerlosen, Waren- oder Personenbeförderung eingesetzt werden, wobei dann entsprechender Stauraum oder Plätze für die zu befördernden Personen vorliegen muss. Für die Warenbeförderung ist es dabei auch von besonderem Vorteil, wenn ein automatisiertes Lager- und Ausgabesystem integriert ist, damit während einer Fahrt beziehungsweise auf einer Route mehrere Waren an unterschiedlichen Positionen gezielt ausgeliefert werden können.

Mit Bezug auf das zur Warenbeförderung ausgelegte Wasserfahrzeug kann dieses auch durch eine Ausstattung mit einer Transportdrohne einschließlich einer dafür geeigneten Start- und Landeplattform ergänzt werden. Die Start- und Landeplattform wird dabei so ausgestattet, dass eine Warenzufuhrvorrichtung für eine auf der Startplattform platzierte Drohne vorgesehen ist, damit vom Stauraum auszuliefernde Waren einer Warenbefestigungsvorrichtung an der Drohne zugeführt werden kann. Die Steuerung der Drohne kann dann beispielsweise automatisiert durch das bordseitige Prozessorsystem erfolgen, oder es besteht die Möglichkeit, die Drohne über einen entsprechenden Downlink von einer Bodenstation zum Wasserfahrzeug und eine kurze Funkverbindung zwischen Wasserfahrzeug und Drohne diese von der Bodenstation aus zu steuern. Vorteilhaft kann dabei am Landeplatz der Drohne auch ein entsprechender Ladeadapter vorliegen, in den sich die Drohne in Ruhestellung einklinkt und damit jederzeit vollgeladen zum Betrieb bereit steht. Bei einem solchen Gesamtsystem ist es besonders vorteilhaft, dass mit Hilfe des autonom fahrenden Wasserfahrzeuges problemlos große Strecken auch in unwegsame Gebiete zurückgelegt werden können und über die Drohnenauslieferung Anlandungsbauten überflüssig werden beziehungsweise auch uferfernere Ziele bedient werden können. Grundsätzlich ist ein solches kombiniertes Wasserfahrzeug/Drohnen-System mit entsprechender Auslegung auch zur Personenbeförderung geeignet.

In einer weiteren alternativen oder ergänzenden Ausstattung des Fahrzeuges kann dieses mit einem zusätzlichen Müllauffangsystem ausgestattet werden. Dies sind beispielsweise am Bug oder seitlich angebrachte Fangarme, die vorzugsweise ausklappbar oder ausfahrbar ausgestaltet sind, und die so angebracht sind, dass sie teilweise in die Wasseroberfläche eintauchen und damit dort befindlichen Müll an das in Fahrt befindliche Wasserfahrzeug heranholen, dort über eine teilweise ins Wasser eintauchende Transportvorrichtung, zum Beispiel ein teildurchlässiges Förderband, den aufgesammelten Müll in das Wasserfahrzeug zur weiteren Verarbeitung leiten. Im Wasserfahrzeug kann sich eine Müllpresse, vorzugsweise kombiniert mit einer vorgeschalteten Zerkleinerungsanlage, befinden, damit der eingesammelte Müll geschreddert und komprimiert wird.

Zusätzlich kann auch ein automatisiertes Absetzsystem verbaut sein, welches komprimierte Einheiten von gesammeltem Müll wieder aussetzt beziehungsweise automatisch auf ein anderes Wasserfahrzeug umlädt. Dadurch können diese komprimierten Mülleinheiten von einfacheren und kostengünstigeren Wasserfahrzeugen aufgenommen und an Land transportiert werden. Auch hierfür können erfindungsgemäß ausgestattete unbemannte Wasserfahrzeuge verwendet werden.

Optional kann zur vereinfachten Übergabe der komprimierten Mülleinheiten an den Wasserfahrzeugen jeweils ein entsprechender Adapter vorgesehen sein, so dass das abholende Wasserfahrzeug an dem Wasserfahrzeug, welches die komprimierten Mülleinheiten erzeugt, ankoppeln kann, um eine automatische direkte und geordnete Übergabe der Mülleinheiten zu ermöglichen.

Ebenso ist es möglich das erfindungsgemäße Wasserfahrzeug mit einer Art Anhänger - mit oder ohne eigenem Antrieb - auszustatten, welcher zur Sammlung und Aufbewahrung der komprimierten Mülleinheiten dient. Ist dieser voll, so kann er - falls ein eigener Antrieb mit entsprechender autonomer Steuerung vorhanden ist - den aufgesammelten Müll an eine Landsammelstelle beziehungsweise in einen Hafen bringen, während ein weiterer leerer Anhänger an das müllsammelnde Wasserfahrzeug angedockt wird. Alternativ kann auch ein antriebsloser Anhänger verwendet werden, an den dann bei Bedarf ein Maschinenfahrzeug andockt, welches den Anhänger entsprechend bugsiert oder schleppt. Hierbei kann es besonders vorteilhaft sein, wenn die Wasserfahrzeuge gegenseitig kompatible Kopplungsadapter aufweisen, mit denen einerseits der antriebslose Anhänger an das müllsammelnde Wasserfahrzeug angekoppelt werden kann und andererseits das Maschinenfahrzeug an den antriebslosen Anhänger gekoppelt werden kann.

Zur kostengünstigen Verwirklichung einer intensiven Reinigung eines vorgegebenen Gebietes, beispielsweise eines Hafens, einer Bucht oder eines Meeresgebietes, kann so eine Flotte aus einem oder wenigen, aber teuren Wasserfahrzeugen zur Müllsammlung, einer größeren Anzahl von antriebslosen Anhängern, und einem oder einigen Maschinenfahrzeugen zur Bewegung der Anhänger bestehen. Das Wasserfahrzeug, welches den Müll automatisch einsammelt und verdichtet, wird dabei zeit- und kostenoptimal bezüglich seiner Fähigkeiten eingesetzt, während die einfachen Transportaufgaben - Transport von der Müllsammelstelle zur Übergabe an Land - durch eine Vielzahl kostengünstigere Anhänger im Zusammenwirken mit einem oder einigen nur für den Antrieb ausgerüsteten Maschinenfahrzeugen ausgeführt werden.

Alternativ zur direkten Übergabe der Mülleinheiten können diese auch mit einem Peilsender oder dem AIS-System versehen im Wasser wieder ausgesetzt werden, wobei dann ein Transportwasserfahrzeug diese Einheiten gestützt durch den Peilsender oder AIS-System, vorzugsweise automatisch und unbemannt, einsammelt und abtransportiert.

Für eine optimale Ausnutzung des müllsammelnden Wasserfahrzeuges kann dieses auch mit mindestens einem automatisch auswechselbaren Antriebsenergiepaket, beispielsweise mit Akkupacks und/oder Treibstoffbehältern und/oder Gasbehältern, ausgestattet werden, wobei diese jeweils einen Adapteranschluss aufweisen, damit sie mit Hilfe einer automatisierten Wechselvorrichtung ausgetauscht werden können. Die Belieferung mit solchen Antriebsenergiepaketen kann beispielsweise direkt durch ein Maschinenfahrzeug, welches Anhänger bugsiert, erfolgen oder es können in den Anhängern solche Antriebsenergiepakete zur Versorgung des müllsammelnden Wasserfahrzeuges mit einer entsprechenden Wechselvorrichtung eingebaut sein. Werden neue Antriebsenergiepakete geliefert, werden gleichzeitig die verbrauchten beziehungsweise geleerten Antriebsenergiepakete wieder an Land mitgenommen.

In diesem Zusammenhang ist auch zu erwähnen, dass es besonders günstig ist, wenn die Adapter beziehungsweise Kopplungsmechanismen aller Wasserfahrzeuge untereinander kompatibel sind, so dass der Ankopplungsmechanismus des Maschinenfahrzeuges sowohl an einen Anhänger als auch an das müllsammelnde Fahrzeug passt. Dies ermöglicht dann auch eine einfache Ankopplung des Maschinenfahrzeuges an das müllsammelnde Wasserfahrzeug, um Antriebsenergiepakete zu übergeben beziehungsweise auszutauschen. Im Falle eines Maschinenschadens beim müllsammelnden Wasserfahrzeug kann dieses dann auch problemlos durch ein Maschinenfahrzeug geborgen werden.

Während die oben dargestellten Merkmale des erfindungsgemäßen Wasserfahrzeuges im Wesentlichen Hardware-Ausrüstungen betreffen, wird nachfolgend auf eher programmtechnisch zu verwirklichende Eigenschaften beziehungsweise Verfahren - die im Sinne dieser Schrift ausdrücklich ebenfalls zum Rahmen der Erfindung gehören - eingegangen, die im Prozessorsystem des Wasserfahrzeuges durch Programmcode gespeichert sind und im Betrieb ausgeführt werden. Hierbei sei ausdrücklich darauf hingewiesen, dass das Prozessorsystem selbst aus einem oder mehreren CPUs (=central processing unit), einem oder mehreren Speichersystemen in Form von verbauten Speicherchips (RAM, ROM, EPROM, Flash-Speichern, etc.), mechanischen und elektronischen Festplatten (HDD, SSD) und entsprechenden Chipsätzen zum Aufbau von Computern bestehen, wobei auch mehrere verteilte und miteinander kommunizierende Untersysteme darin enthalten sein können.

Entsprechend wird vorgeschlagen, dass eine Programmierung vorliegt, welche eine Fernsteuerung des Wasserfahrzeuges ermöglicht, indem über terrestrischen oder satellitengestützten Funk:

- zur Fernsteuerung notwendige Informationen, insbesondere Positionsdaten, Maschinendaten des mindestens einen Antriebs, Daten einer optischen und/oder funktechnischen Erfassung, und/oder Sensordaten von an Bord befindlichen Sensorsystemen vom Wasserfahrzeug zu einer entfernten Steuerzentrale (=Basisstation) übertragen werden,
- Steuerbefehle für das Wasserfahrzeug empfangen und ausgeführt werden und
- Auslösebefehle für an Bord befindliche Ausrüstung empfangen und ausgeführt werden. Mit dieser Ausführung kann das Wasserfahrzeug von einer Steuerzentrale oder Basisstation aus gesteuert werden und auch Aktionen an Bord, wie beispielsweise das Wassern von Rettungsinseln von der Basisstation aus gelenkt werden. Zur Vermeidung von möglichen Störungen von außerhalb ist es dabei besonders vorteilhaft, wenn die funktechnische Kommunikation verschlüsselt und gegebenenfalls auch redundant stattfindet. Die Redundanz kann sich auf mehrere parallele Funkkanäle und/oder auf die mehrfache Übertragung der gleichen Information beziehen. Dies gilt für alle hier erwähnten redundanten Datenübertragungen.

In einer vorteilhaften Ausbildung des Wasserfahrzeuges kann dieses auch derart programmiert sein, dass eine eigenständig ausgeführte Steuerung des Wasserfahrzeuges zu einem vorgegebenen Zielpunkt oder entlang eines vorgegebenen Tracks ermöglicht ist. Hierbei ist es besonders vorteilhaft, wenn bei Erreichung eines Zielpunktes oder Erkennung eines vorgegebenen Ereignisses vom Wasserfahrzeug aus eine, vorzugsweise sattelitengestützte, Funkverbindung oder eine, vorzugsweise sattelitengestützte, Netzwerkverbindung (streaming) zu einer Steuerzentrale aufgebaut wird. Auch hierbei ist es zur Vermeidung von möglichen Störungen von außerhalb vorteilhaft, wenn die funktechnische Kommunikation verschlüsselt und gegebenenfalls auch redundant stattfindet.

Als weitere vorteilhafte Programmierung wird vorgeschlagen, dass unter Verwendung einer IR-Bildgebung - beispielsweise mit einer Wärmesichtkamera oder einem Linescanner - typische Signaturen von Personen im Wasser erkannt werden, dann die Position der erkannten Signatur, zumindest relativ zum Boot, bestimmt wird, das Wasserfahrzeug an diese Position geführt und Bergemaßnahmen einleitet werden.

Alternativ oder ergänzend kann die Programmierung auch derart gestaltet sein, dass unter Verwendung eines AIS-Systems AIS-Notsignale von Personen im Wasser erkannt werden, aus dem AIS-Notsignal die gesendete GPS-Position der Person ermittelt, das Wasserfahrzeug an diese Position führt und dann Bergemaßnahmen einleitet werden.

Weiterhin wird vorgeschlagen die Programmierung auch derart zu gestalten, dass das Prozessorsystem unter Verwendung eines Homing-Systems für PLBs (PLB = personal locator beacon) PLB-Signale empfängt, erkennt und auswertet, wobei aus dem PLB-Signal die relative Richtung zum Sender des PLB-Signals ermittelt wird, das Wasserfahrzeug in diese Richtung bis zum PLB-Sender geführt und bei Erreichen des PLBs Bergemaßnahmen eingeleitet werden.

Vorteilhaft kann auch das Wasserfahrzeug automatisch derart gesteuert werden, dass mit mehreren Kreuzpeilungen die Position des angepeilten PLBs bestimmt wird, das Wasserfahrzeug auf die so ermittelte Position geführt wird und dort Bergemaßnahmen einleitet.

Schließlich wird auch vorgeschlagen, dass im Prozessorsystem Programmcode gespeichert ist und im Betrieb ausgeführt wird, welcher:

- zunächst über funktechnische Maßnahmen die Position (zum Beispiel über Homing zum PLB oder über personal AIS) einer zu bergenden Person grob bestimmt,
- das Wasserfahrzeug automatisch in die Nähe der so bestimmten Position führt,
- dort unter Verwendung einer IR-Bildgebung (Wärmesichtkamera) typische Signaturen von Personen im Wasser sucht und nach deren Erkennung die genaue Position der erkannten Signatur, zumindest relativ zum Boot, bestimmt,
- das Wasserfahrzeug an diese Position heran führt und
- in unmittelbarer Nachbarschaft der gefundenen Person Bergemaßnahmen einleitet.

Es wird ausdrücklich darauf hingewiesen, dass alle in dieser Schrift beschriebenen und dargestellten Ausrüstungsvarianten des Wasserfahrzeuges untereinander kombiniert werden können, dies gilt auch für Einzelmerkmale zum Zwecke der Definition eines umfassenden Schutzes.

Im Folgenden wird die Erfindung anhand der bevorzugten Ausführungsbeispiele mit Hilfe der Figuren näher beschrieben, wobei nur die zum Verständnis der Erfindung notwendigen Merkmale dargestellt sind. Es zeigen im Einzelnen:

FIG 1:  erfindungsgemäßes Wasserfahrzeug in Seitenansicht mit eingefahrenem Teleskopmast;
FIG 2:  erfindungsgemäßes Wasserfahrzeug in 3D-Darstellung mit ausgefahrenem Teleskopmast;
FIG 3:  beispielhaftes Ausstattungsschema eines erfindungsgemäßen Wasserfahrzeuges;
FIG 4:  schematische Darstellung der Kommunikationsverbindungen des Wasserfahrzeuges bei einem SAR-Einsatz;
FIG 5:  schematische Darstellung der Kommunikations-reichweiten für das Wasserfahrzeug über unterschiedliche Kommunikationssysteme:
FIG 6:  erfindungsgemäßes Wasserfahrzeug zum Einsammeln von Müll in einer Aufsicht;
FIG 7:  erfindungsgemäßes Wasserfahrzeug zum Einsammeln von Müll mit zusätzlich angehängtem Wasserfahrzeug zur Speicherung des aufgesammelten Mülls;
FIG 8:  erfindungsgemäßes Wasserfahrzeug zum Einsammeln von Müll mit zusätzlichem antriebslosem Anhänger zur Speicherung des aufgesammelten Mülls und daran gekoppeltem Maschinenfahrzeug;
FIG 9:  schematische Darstellung der Arbeitsweise einer Flotte aus einem erfindungsgemäßen Wasserfahrzeug zum Einsammeln von Müll, mehreren antriebslosen Anhängern und zwei Maschinenfahrzeugen zum Antreiben der Anhänger.

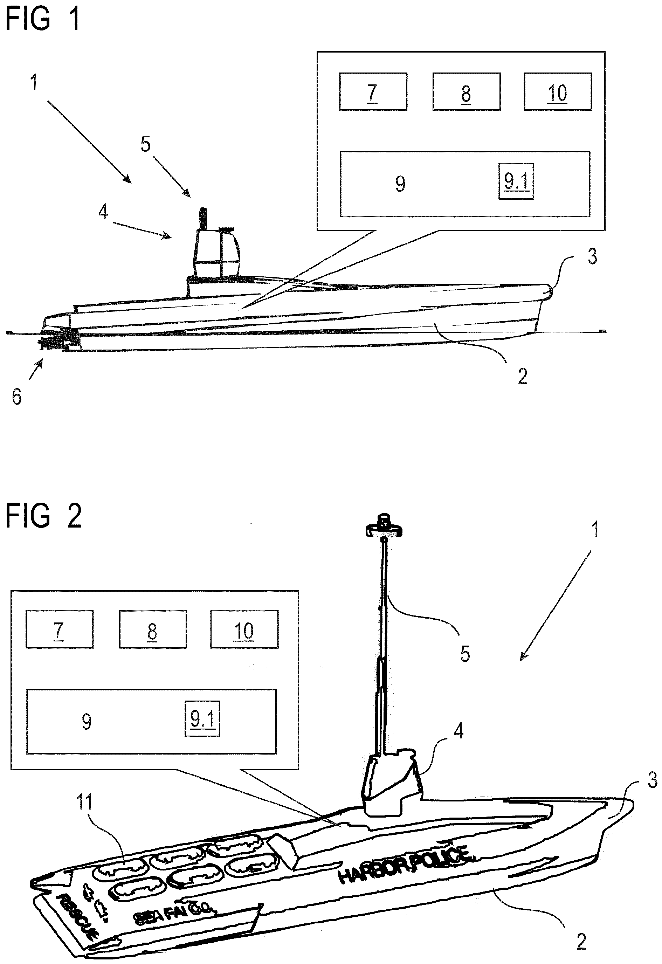

Die **Figur 1** zeigt ein als Monohull ausgebildetes erfindungsgemäßes Wasserfahrzeug 1 in Seitenansicht mit einem aus einem Kohlefaserverbundstoff ausgebildeten Rumpf 2, der mit einem seitlich und vorne umlaufenden Schlauchbootwulst 3 ausgestattet ist. Das Wasserfahrzeug 1 verfügt dabei über einen Turm 4, in dem ein Teleskopmast 5 - hier weitgehend eingefahren - eingebaut ist. Weiterhin verfügt das Wasserfahrzeug 1 über einen Jetantrieb 6, dessen Austrittsdüsen am Heck angeordnet sind.

Erfindungsgemäß ist dieses Wasserfahrzeug 1 außerdem mit mindestens einem Sende- und Empfangssystem 7 zum vorzugsweise verschlüsselten Datenaustausch mit einer entfernten Gegenstation ausgestattet. Weiterhin verfügt das erfindungsgemäße Wasserfahrzeug über mindestens ein Sensorsystem 8, das mit dem Prozessorsystem 9 verbunden ist und mit diesem zusammenarbeitet. Das Prozessorsystem 9 verfügt über einen Speicher 9.1, in dem Programmcode gespeichert ist, der zumindest eine automatisch gesteuerte, vorzugsweise unbemannte, Fahrt des Wasserfahrzeuges auf See ermöglicht. Zusammenfassend ist auch über das Bezugszeichen 10 ein Bündel von Antriebssensoren dargestellt, mit denen der verwendete Antrieb bezüglich seines Status überwacht und gesteuert werden kann. Die zur automatischen Fahrt notwendigen Datenverbindungen zwischen dem mindestens einen Sende- und Empfangssystem 7, dem mindestens einen Sensorsystem 8, den Antriebssensoren 10 einschließlich der zum Betrieb notwendigen Aktoren und dem Prozessorsystem 9 sind zur besseren Übersicht nicht näher dargestellt. Es wird jedoch darauf verwiesen, dass solche Datenverbindungen vorzugsweise über Bussysteme, wie beispielsweise CAN-Bus oder NMEA2000 oder Ethernet-Verbindungen, verwirklicht werden können. Allerdings können auch - ohne den Rahmen der Erfindung zu verlassen - einfache Pear-to-Pear-Verbindungen, vorzugsweise nach dem NMEA 0183 - Standard (NMEA = National Marine Electronics Association), zur Datenkommunikation verwendet werden.

In der **Figur 2** ist ein ähnliches erfindungsgemäßes Wasserfahrzeug 1 in einer 3D-Darstellung mit ausgefahrenem Teleskopmast 5 gezeigt. An der Spitze des Teleskopmastes 5 befinden sich optische Sensorsysteme, die mit einer lagestabilisierenden Plattform bezüglich weitgehend parallel zu einer vorgegebenen Ebene, vorzugsweise waagerecht, gehalten werden. Gegenüber dem in der Figur 1 gezeigten Wasserfahrzeug 1 verfügt das in der Figur 2 gezeigte Wasserfahrzeug 1 über wesentlich größeren Raum zwischen den Turmaufbauten 4 und dem Heck, so dass hier sechs automatisch zu wassernde Rettungsinseln 11 in jeweils einer entsprechenden Halterung untergebracht werden können. Vorzugsweise sind solche Rettungsinseln zumindest mit Überlebensausrüstungen und Signalmunition ausgestattet. Zusätzlich können diese auch noch mit Funkgeräten, GPS- und AIS-Systemen ausgestattet werden. Im Übrigen verfügt das hier gezeigte Wasserfahrzeug 1 über die bereits in der Figur 1 beschriebene Ausstattung.

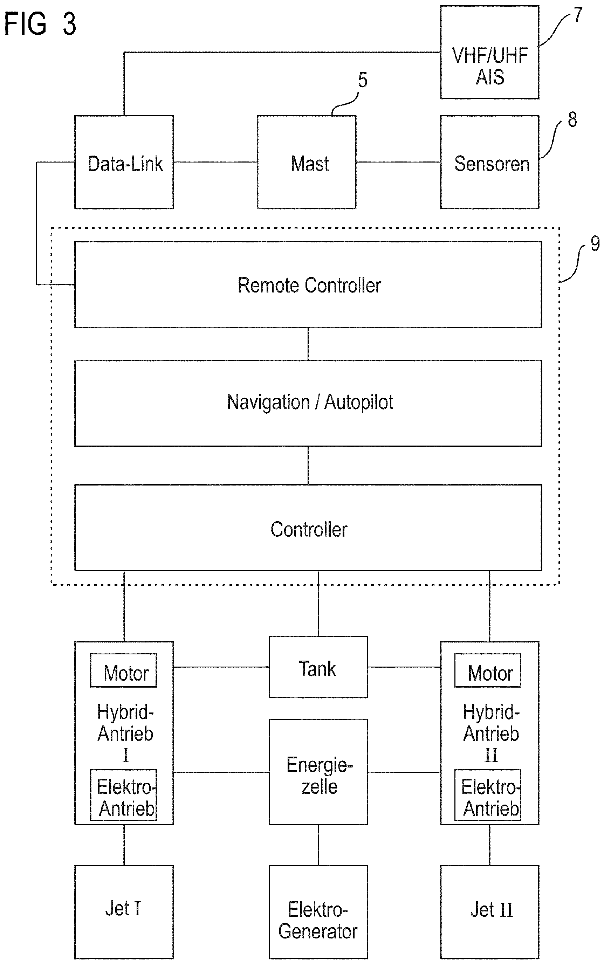

In der **Figur 3** ist nochmals ein beispielhaftes Ausstattungsschema eines erfindungsgemäßen Wasserfahrzeuges 1 dargestellt. Dabei ist das Wasserfahrzeug 1 mit zwei Jet-Antriebssträngen ausgestattet, wobei jeder Strang jeweils einen Jet-Antrieb Jet I und Jet II antreibt. Die beiden Hybridantriebe I und II verfügen jeweils über einen Motor (=Verbrennungsantrieb) und einen Elektro-Antrieb. Weiterhin sind mindestens ein Tank zur Speicherung des Verbrennungstreibstoffes, meist Diesel, und eine Energiezelle zur Speicherung der elektrischen Energie vorhanden. Die Energiezelle, die in den meisten Fällen als LiIon-Batteriebank ausgebildet ist, wird meist zumindest über einen separaten Elektro-Generator aufgeladen, wobei allerdings auch die Elektro-Antriebe der HybridAntriebe ebenfalls zur Stromerzeugung herangezogen werden können. Gesteuert wird der Hybrid-Antrieb über einen Controller, der wiederum mit einem Navigationssystem und Autopiloten und über einen Remote-Controller mit den Sensoren beziehungsweise dem Sensorsystem 8 auf dem ausfahrbaren Mast (=Teleskopmast) 5 und der Funkanlage beziehungsweise dem Sende- und Empfangssystem 7 verbunden ist.

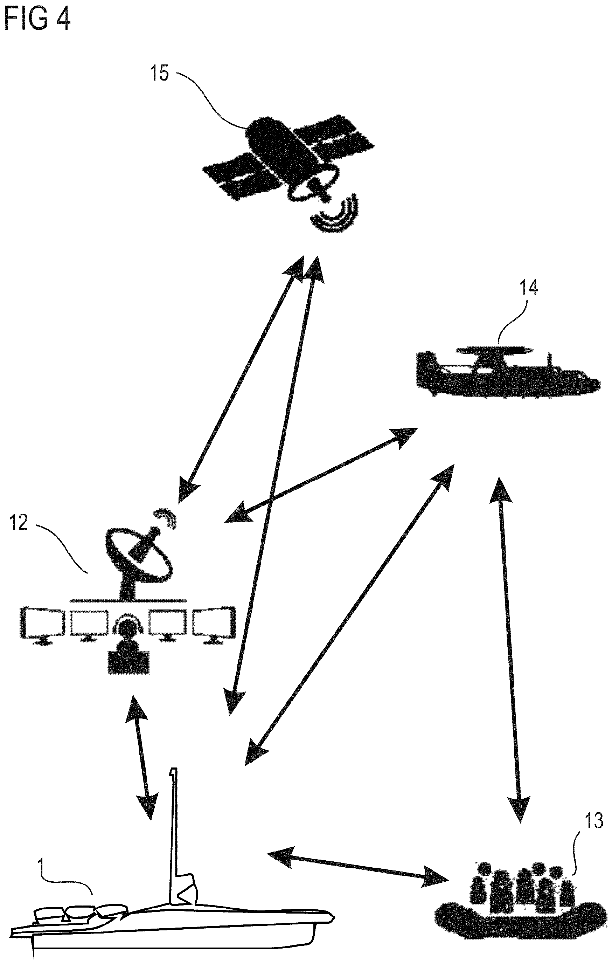

In der **Figur 4** ist eine schematische Darstellung der Kommunikationsverbindungen des erfindungsgemäßen Wasserfahrzeuges 1 bei einem beispielhaften SAR-Einsatz gezeigt. Hierbei wird das unbemannte Wasserfahrzeug 1 über eine Basisstation 12 kontrolliert, wobei von der Basisstation 12 zunächst dem Wasserfahrzeug 1 ein anzusteuerndes Ziel oder eine zu fahrende Route übertragen wird. Das Wasserfahrzeug 1 steuert dann selbständig das angegebene Ziel an oder fährt die angegebene Route ab, wobei die im Wasserfahrzeug 1 befindlichen Sensorsysteme 8 und Sende- und Empfangssysteme 7 Hindernisse oder anderen Schiffsverkehr erkennen und an das steuernde Prozessorsystem 9 weitergeben, damit dieses entsprechend ausweichen kann. Hierbei kann das Prozessorsystem 9 zusätzlich noch über detaillierte elektronische Seekarten verfügen, so dass auch Land und Untiefen automatisch vermieden werden. Ergänzend kann bei Manövern im Bereich flacher Gewässer auch ein FLS (FLS = forward looking sonar) eingesetzt werden, um möglichen Unterwasserhindernissen auszuweichen. Grundsätzlich ist es bei dieser Fahrt möglich, unmittelbaren Funkkontakt mit der Basisstation 12 über direkten Funk oder ein als Relaisstation dienendes Flugzeug 14 oder einen Satelliten 15 zu halten, allerdings ist eine selbständige Fahrt ohne Remote-Kontrolle weniger aufwendig beziehungsweise kostengünstiger.

Erreicht das Wasserfahrzeug 1 das angegebene Ziel, so kann dieses entweder mit Hilfe der an Bord befindlichen Sensoren, insbesondere mit Infrarotbildgebung, oder über PLBs selbständig nach im Wasser treibenden Personen 13 suchen, sich diesen nähern und an Bord befindliche Bergesysteme auslösen. Hierdurch können einerseits Rettungsinseln ausgesetzt werden oder das Wasserfahrzeug kann Personen direkt ansteuern, so dass diese an Bord geholt werden können und mit dem Wasserfahrzeug selbst in Sicherheit gebracht werden. Alternativ sind auch Szenarien möglich, bei denen ein Flugzeug sehr schnell eine Rettungsinsel in einem weit entfernten Gebiet aussetzt und das erfindungsgemäße Wasserfahrzeug 1 aufgrund seiner langsameren Geschwindigkeit zeitverzögert sich dorthin begibt, um die in der Rettungsinsel befindlichen Personen zu übernehmen und in Sicherheit zu bringen.

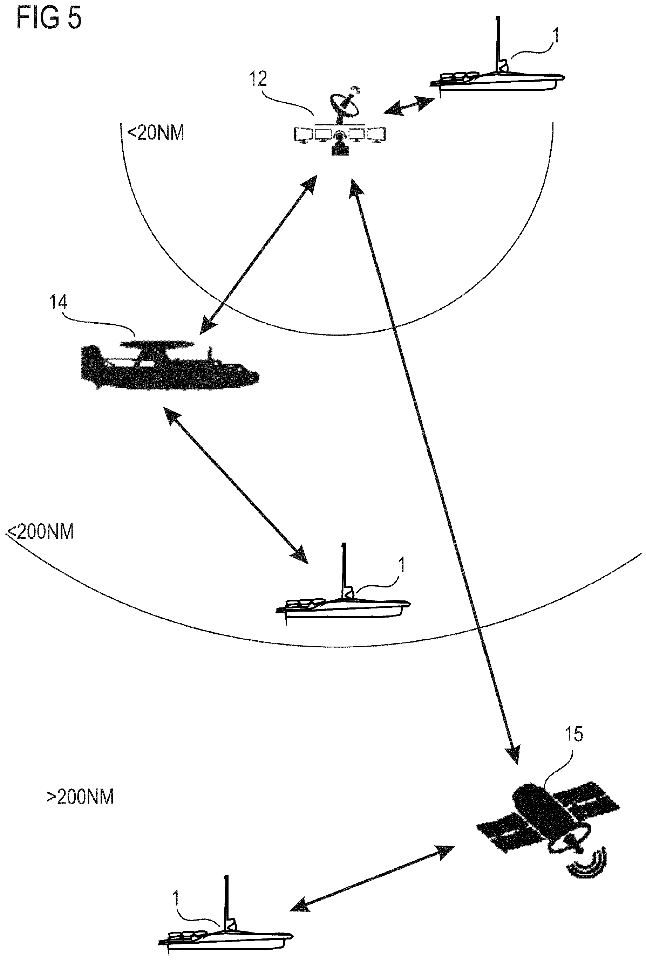

Die **Figur 5** verdeutlicht an Hand einer schematischen Darstellung die Kommunikationsreichweiten für das Wasserfahrzeug 1 über unterschiedliche Kommunikationssysteme. Entsprechend kann eine direkte Funkkommunikation zwischen einer Basisstation 12 über VHF- oder UHF-Funk erfolgen, so lange zwischen den Antennen der Basisstation 12 und des Wasserfahrzeuges 1 eine Sichtlinie besteht. Dies entspricht etwa einer Entfernung von bis zu 20 NM, wobei die maximale Entfernung von der Höhe der beiden in Verbindung stehenden Antennen abhängt. Mit der Formel

$$\text{Reichweite} \sim 2 * \left( \sqrt[2]{H\ddot{o}he\,der\,ersten\,Antenne} + \sqrt[2]{H\ddot{o}he\,der\,zweiten\,Antenne} \right)$$

lässt sich diese ungefähre Reichweite abschätzen, wobei die Reichweite in NM und die Höhe der Antennen in Metern angegeben wird.

Wird ein Flugzeug 14 als Relaisstation verwendet, so kann diese Reichweite entsprechend der Flughöhe des Flugzeuges 14 wesentlich erhöht werden. Bei einem in 3000 Meter Höhe fliegenden Flugzeug 14 ergibt sich eine Gesamtreichweite von ca. 2x100NM=200NM. Wird hingegen eine Satellitenkommunikation mit einem oder mehreren Satelliten 15 verwendet, so ist die Reichweite global nicht begrenzt.

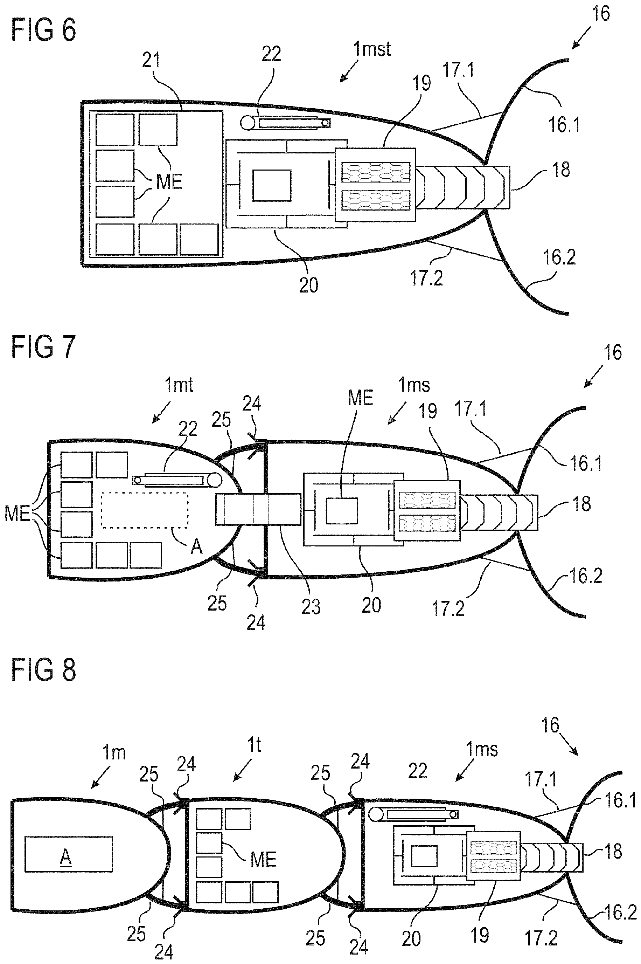

Entsprechend einer weiteren Anwendung des erfindungsgemäß ausgestalteten autonom fahrenden Wasserfahrzeuges 1mst kann dieses auch zur Reinigung vorgegebener Seegebiete und/oder Wasserflächen eingesetzt werden. Die **Figur 6** zeigt ein Beispiel eines solchen autonom fahrenden Wasserfahrzeuges 1mst, welches ergänzend zu den bereits oben beschriebenen Ausstattungsmerkmalen zusätzlich mit einem am Bug angebrachten Rechen 16 zur Aufnahme von im Wasser treibenden Müll, insbesondere Kunststoffmüll. Der Rechen 16 verfügt hier über zwei Rechenarme 16.1 und 16.2, welche jeweils über Gelenke und Schwenkantriebe 17.1 und 17.2 so positioniert werden können, dass bei Vorwärtsfahrt im Wasser treibender Müll zu einer zentral gelegenen Aufnahmeposition geleitet wird. An dieser Aufnahmeposition befindet sich eine Fördervorrichtung 18, welche so ausgestaltet ist, dass der aufgefangene Müll zur weiteren Verarbeitung in das Wasserfahrzeug 1mst gelangt. Hierbei wird möglichst viel, vom Müll noch mitgenommenes Wasser abgeleitet. Der weitgehend entwässerte Müll wird dann im gezeigten Beispiel zu einer Schreddervorrichtung 19 geleitet, welche den aufgefangenen Müll zerkleinert und dann zu einer nachfolgenden Pressvorrichtung 20 führt. Dort kann der aufgefangene Müll komprimiert und in problemlos handhabbaren Mülleinheiten ME portioniert werden.

Grundsätzlich kann ein solches Wasserfahrzeug 1mst so gestaltet werden, dass die produzierten Mülleinheiten ME in einem Förderband oder einem sonstigen Fördersystem in einem offenen oder geschlossenen Lagerraum 21 gelagert und gestapelt wird. Optional kann allerdings auch an Deck ein automatisch gesteuerter Ausleger- oder Kransystem 22, vorzugsweise mit einem Greifer ausgestattet, angebracht sein, welcher durch das an Bord befindliche Prozessorsystem gesteuert die Mülleinheiten ME aus der Pressvorrichtung 20 entnimmt und im Transportkompartment 21 ablegt. Vorteilhaft kann dieses System auch am Entladeort verwendet werden, um die Mülleinheiten ME aus dem Wasserfahrzeug 1mst, gegebenenfalls auf ein sonstiges Transportfahrzeug, zu entladen. Hierdurch kann das erfindungsgemäße Wasserfahrzeug 1mst auch ohne besondere landseitige Infrastruktur agieren und auch an sehr abgelegenen Orten eingesetzt werden.

Aufgrund der relativ aufwendigen Ausstattung des erfindungsgemäßen Wasserfahrzeuges 1mst zum Einsammeln von Müll kann es besonders günstig sein, wenn zusätzlich für die einfachere Aufgabe des Transportes der Mülleinheiten ME von der Sammelstelle zum Entladeort ein einfacheres, jedoch erfindungsgemäß ausgestattetes, Wasserfahrzeug 1mt verwendet wird, welches ausschließlich auf den autonomen Transport der Mülleinheiten ME ausgelegt ist. Eine solche Kombination aus einem müllsammelnden und müllaufbereitenden Wasserfahrzeug 1ms und einem auf den Transport ausgerichteten Wasserfahrzeug 1mt ist in der **Figur 7** gezeigt. Hierbei ist das zusätzliche für den Transport ausgelegte, autonom fahrende Wasserfahrzeug 1mt mit dem müllsammelnden angehängten Wasserfahrzeug 1ms zur Speicherung und zum Abtransport des aufgesammelten Mülls gekoppelt. Hierbei werden die Lagerung und der Transport auf eine wesentlich kostengünstigere Einheit ausgelagert, so dass auch längere Fahrzeiten zwischen der Sammelstelle des Mülls und der Entladestelle günstiger realisierbar sind. Der erfindungsgemäß ausgestattete Antrieb A des Fahrzeuges 1ms ist in der Figur 7 nur symbolisch angedeutet, entspricht jedoch auch der zuvor beschriebenen Antriebssituation einschließlich der notwendigen Steuerung über ein Prozessorsystem mit entsprechenden Computerprogrammen.

Erfindungsgemäß kann das Wasserfahrzeug 1mt auch zusätzlich mit einer Be- und Entladevorrichtung, zum Beispiel einem Teleskopkran 22, ausgestattet sein, wobei diese Vorrichtung sowohl die Übernahme der Mülleinheiten ME vom sammelnden Wasserfahrzeug 1ms her übernehmen kann, als auch die Entladung an einer Entladestelle E beziehungsweise in einem Hafen H ausführen kann und damit weitgehend autonom von sonstiger Infrastruktur bleibt. Ergänzend oder alternativ kann auch im Wasserfahrzeug 1ms eine spezielle Transportvorrichtung 23 verbaut werden, welche für den Transport der Mülleinheiten ME von der Presse 20 zum selbst angetriebenen Anhänger 1mt oder auch dem antriebslosen Anhänger 1t in der nachfolgenden Figur 8 vornimmt.

Zur weiteren Arbeitsteilung und kostenoptimierten Ausrüstung können die Funktionen "Sammeln", "Transport", "Antrieb" weiter auf speziell ausgerüstete Wasserfahrzeuge verteilt werden. Die Indizes am Bezugszeichen sind entsprechend mit "m" für "Maschinenantrieb", "s" für "Sammeln" und "t" für "Transport" bezeichnet. Entsprechend zeigt die **Figur 8** ein erfindungsgemäßes Wasserfahrzeug 1ms zum Einsammeln von Müll mit zusätzlichem antriebslosem Anhänger 1t zur Speicherung und insbesondere zum Transport des aufgesammelten Mülls und einen daran gekoppeltes Maschinenfahrzeug 1m zum Antrieb. Dies ergibt einen Gesamtverband aus drei erfindungsgemäßen und Wasserfahrzeugen 1ms, 1t und 1m. Alle drei Wasserfahrzeuge - die beispielhaft untereinander gekoppelt dargestellt sind - sind hierbei optimal für die Erfüllung ihrer jeweiligen Aufgabe ausgerüstet. Je nach Anforderungsintensität der einzelnen Funktionen sollte eine entsprechende Anzahl der einzelnen Funktionseinheiten vorliegen.

Das müllsammelnde Wasserfahrzeug 1ms und das Maschinenfahrzeug 1m sind für das erfindungsgemäße autonome Fahren ausgerüstet, wobei die bereits zuvor gezeigte Antriebssituation und die notwendigen Sensoren und das Prozessorsystem in den Figuren 6ff. nicht speziell dargestellt sind, jedoch in den autonom fahrenden Wasserfahrzeugen vorhanden sind. Lediglich das ausschließlich zum Transport vorgesehene Wasserfahrzeug 1t bildet eine Ausnahme und weist zumindest keine der Fortbewegung dienende Sensoren und Steuerelemente auf.

In den beiden Figuren 7 und 8 sind außerdem die Wasserfahrzeuge 1ms und 1t mit heckseitig angeordneten Kopplungsadaptern 24 und die Wasserfahrzeuge 1mt, 1m und 1t mit bugseitig angeordneten Kopplungsarmen 25 versehen, welche dazu ausgestaltet sind, eine robuste und einfach herzustellende Verbindung zwischen den Wasserfahrzeugen mit Hilfe der automatischen Steuerung zu erzeugen. Hierfür ist der Kopplungsadapter 24 auch so ausgestaltet, dass die Kopplungsarme 25 auch bei nicht exakter Annäherung eingefangen, justiert und automatisch gekoppelt werden.

Grundsätzlich lässt sich für eine optimale Auslegung der Fahrzeugflotte sagen, dass je weiter der Sammelort des Mülls vom Entladeort des Mülls entfernt ist, eine intensivere Funktionsaufteilung sinnvoller ist. So ist es beispielsweise zur Reinigung von Hafenbecken, wo davon auszugehen ist, dass immer kurze Wege zwischen Sammelort und Entladeort vorliegen, ein vollintegriertes Wasserfahrzeug 1mst gemäß Figur 6 besonders zu bevorzugen. Ist der Weg zwischen dem Sammelort und der Entladestelle besonders lang, wie es beispielsweise bei einer Müllbeseitigung auf dem offenen Meer abseits der Küste vorkommt, so ist es besonders günstig die oben genannten Funktionen, wie in der Figur 8 gezeigt, aufzuteilen. Damit kann die Speicherung und der Transport mit kostengünstigen Wasserfahrzeugen 1m und 1t durchgeführt werden, während das sammelnde und verabeitende Wasserfahrzeug 1ms ausschließlich für diese Aufgaben eingesetzt wird. Für dazwischen liegende Situationen, wie zum Beispiel eine Säuberung eines hafen- und küstennahen Wassergebietes, erscheint eine Aufteilung der Funktionen gemäß der Figur 7 besonders sinnvoll.

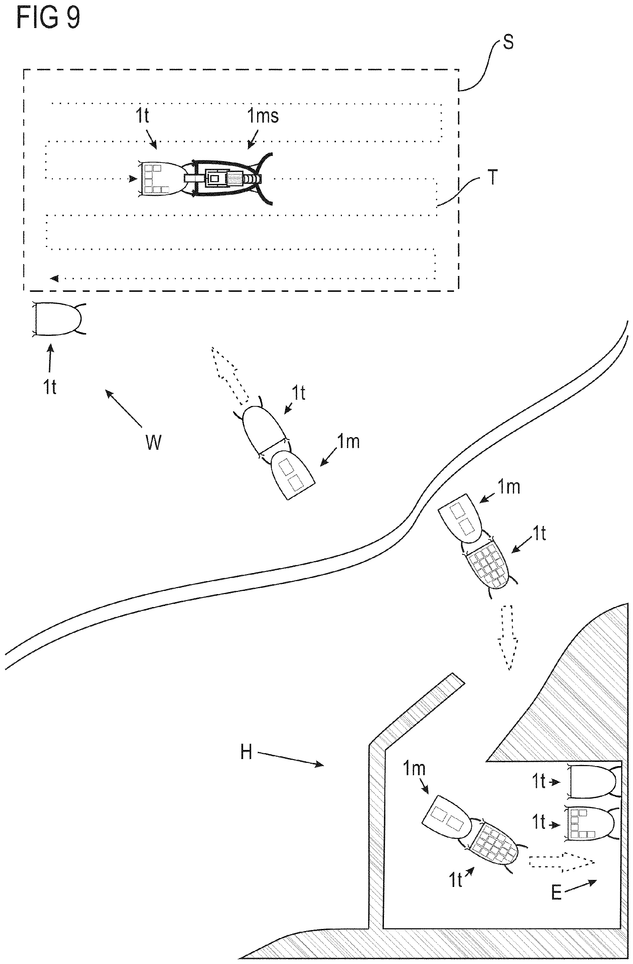

Beispielhaft ist in der **Figur 9** eine schematische Darstellung der Arbeitsweise einer Flotte aus einem erfindungsgemäßen Wasserfahrzeug 1ms zum Einsammeln von Müll, mehreren antriebslosen Anhängern 1t und einigen Maschinenfahrzeugen 1m zum Antreiben der Anhänger 1t gezeigt. Das Fahrzeug 1ms befindet sich in einem relativ weit entfernten Seegebiet S und säubert dieses Seegebiet S, indem es autonom einen vorgegebenen Track T abfährt. Dabei nimmt es mit Hilfe seines Rechens 16 den treibenden Müll auf, verarbeitet ihn zu leicht handhabbaren Mülleinheiten ME, die auf den angehängten Anhänger 1t übertragen werden. Sobald die Ladekapazität dieses Anhängers 1t ausgeschöpft ist, kann dieser prozessorgesteuert gegen einen in Warteposition W befindlichen leeren Anhänger 1t ausgetauscht werden. Dieser Austausch wird dann durch das Wasserfahrzeug 1ms automatisch prozessorgesteuert ausgeführt. Alternativ kann ein solcher Austausch auch durch ein Maschinenfahrzeug 1m automatisiert ausgeführt werden. Dieses Maschinenfahrzeug 1m befördert dann auch den beladenen Anhänger 1t zur Entladestelle E.

Rechts unten ist ein solcher Hafen H mit einer Entladestelle E beziehungsweise einem Entladekai gezeigt. Dorthin werden die vollen Anhänger 1t von den Maschienfahrzeugen 1m zum Entladen und zur weiteren Aufbereitung oder Entsorgung des Mülls bugsiert.

Erfindungsgemäß können solche in der Figur 9 gezeigten Manöver aufgrund der Ausstattung der verwendeten Wasserfahrzeuge auch sattelitengestützt durchgeführt werden, ähnlich wie es an Hand der Figuren 4 und 5 beschrieben ist. Hierdurch kann beispielsweise während der laufenden Operation durch eine Bodenstation das zu säubernde Seegebiet S geändert oder an neuere Kenntnisse angepasst werden.

Es wird darauf hingewiesen, dass Wasserfahrzeuge der erfindungsgemäßen Art entsprechend ihrer Ausrüstung beispielsweise für SAR-Aufgaben - insbesondere für Rettungseinsätze in weit entfernten Gebieten -, Umweltschutzaufgaben, wie zum Beispiel der Einsammlung treibenden Mülls, für Überwachungsaufgaben, insbesondere Grenzüberwachungen, zum Personen- und Warentransport, und Ähnlichem genutzt werden können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere beschränkt sich die Erfindung nicht auf die hier explizit angegebenen Merkmalskombinationen, sondern es können auch für den Fachmann offensichtlich ausführbare andere Kombinationen und Teilkombinationen aus den offenbarten Merkmalen gebildet werden.

Nachfolgend werden besonders günstige Variationen erfindungsgemäßer Ausführungsbeispiele der vorstehend ausgeführten Erfindung beschrieben, wobei die Angaben "röm. 1", "röm. 2",... mit "I", "II", .... gleichzusetzen ist. :

I. Ein Wasserfahrzeug 1, aufweisend:

I.i. einen oder mehrere untereinander verbundene Rümpfe 2 mit Decksaufbauten, wobei zumindest der mindestens eine Rumpf 2 überwiegend aus einem Faserverbundwerkstoff aufgebaut ist,
I.ii.einen Antrieb 6, A zur Erzeugung eines Vortriebs auf dem Wasser,
I.iii. ein Sende- und Empfangssystem 7 zum verschlüsselten Datenaustausch mit einer entfernten Gegenstation,
I.iv. ein Sensorsystem 8, das mit dem Prozessorsystem 9 zusammenwirkt, um eine unbemannte Fahrt des Wasserfahrzeuges 1 auf See zu ermöglichen,
I.v. und ein Prozessorsystem 9 mit Speicher 9.1 und darin gespeichertem Programmcode, welcher im Betrieb die Steuerung auf See ausführt, wobei das Prozessorsystem 9 eine Datenverbindung zu dem vorgenannten mindestens einen Sende- und Empfangssystem 7 und zu dem mindestens einen Sensorsystem 8 aufweist.

II. Wasserfahrzeug 1 gemäß dem voranstehenden Ausführungsbeispiel, wobei zumindest seitlich und am Bug ein umlaufender Gummi- und/oder Schlauchbootwulst 3 vorliegt.

III. Wasserfahrzeug 1 gemäß einem der voranstehenden Ausführungsbeispiele, wobei, bevorzugt zur Verwendung von SAR-Aufgaben,:

III.i. mindestens zwei, vorzugsweise sechs, Halterungen mit automatisch auswerfbaren Rettungsinseln 11 vorliegen, wobei jede Rettungsinsel 11 einem Auslösesystem zum automatischen Auswurf der Rettungsinsel 11 zugeordnet ist, und
III.ii. zwischen den Auslösesystemen und dem Prozessorsystem 9 eine mechanische oder elektrische oder elektronische Verbindung, vorzugsweise eine Datenverbindung, vorliegt, über die ein Auslöseereignis/-impuls/-befehl zur individuellen Aktivierung mindestens eines der Auslösesysteme übertragen wird.

IV. Wasserfahrzeug 1 gemäß einem der voranstehenden Ausführungsbeispiele, wobei mindestens ein Bergesystem für im Wasser treibende Personen 13 verbaut ist.

V. Wasserfahrzeug 1 gemäß dem voranstehenden Ausführungsbeispiel , wobei das mindestens eine Bergesystem aufweist:

V.i. mindestens eine schwere im Salzwasser absinkende, flexible und wasserdurchlässige Rettungsfläche zur Aufnahme einer darauf liegenden Person 13,
V.ii. mindestens zwei ausfahrbare Ausleger, wobei jeder Ausleger einerseits am Rumpf 2 befestigt und mit einem Ende an der Rettungsfläche befestigt ist, sodass ein Ausfahren der Ausleger die Rettungsfläche vom Wasserfahrzeug 1 weg ausbreitet, sodass sich auf die Rettungsfläche eine zu rettende Person 13 aufschwimmen und legen kann,und
V.iii. eine Steuerung, welche durch Einfahren der Ausleger die auf der Rettungsfläche liegende Person 13 an Bord, vorzugsweise in ein seitlich von der Rettungsfläche angeordnetes Kompartment oder Einbuchtung, einholt.

VI. Wasserfahrzeug 1 gemäß einem der voranstehenden Ausführungsbeispiele röm. 4 bis 5, wobei das mindestens eine Bergesystem eine, vorzugsweise seitlich angebrachte automatisch ausfahrbare, Leiter aufweist.

VII. Wasserfahrzeug 1 gemäß einem der voranstehenden Ausführungsbeispiele röm. 4 bis 6, wobei das mindestens eine Bergesystem aufweist:

VII.I. eine Startvorrichtung für eine Wasserdrohne,
VII.ii. eine Wasserdrohne, die über ein Fangseil, vorzugsweise aus aufschwimmendem Material, vorzugsweise mit mehreren Halteschlaufen im Fangseil, mit dem Wasserfahrzeug 1 verbunden ist,
VII.iii. eine Einholvorrichtung für das Fangseil,
VII.iv. eine Steuervorrichtung, welche die Wasserdrohne automatisch an eine im Wasser schwimmende/treibende Person 13 heran oder um diese herum führt.

VIII. Wasserfahrzeug 1 gemäß einem der voranstehenden Ausführungsbeispiele röm. 4 bis 7, wobei das mindestens eine Bergesystem aufweist:

VIII.i. eine Start- und Aufnahmevorrichtung für eine Wasserdrohne,
VIII.ii. eine funkfernsteuerbare Wasserdrohne,
VIII.iii. und ein Steuersystem für die Wasserdrohne,
VIII.iv. wobei die Wasserdrohne als Scouter mit Handsteuerung ausgebildet ist, so dass eine einzuholende Person 13 den Scouter als Schwimmhilfe mit Antrieb nutzen und sich zum Wasserfahrzeug 1 ziehen lassen kann.

IX. Wasserfahrzeug 1 gemäß einem der voranstehenden Ausführungsbeispiele, wobei der Antrieb ein Jetantrieb 6 mit mindestens zwei getrennt ansteuerbaren Wasserstrahlaustritten ist.

X. Wasserfahrzeug 1 gemäß dem voranstehenden Ausführungsbeispiel röm. 8, wobei mindestens ein Wasserstrahlaustritt in seiner Richtung, vorzugsweise unabhängig von anderen Wasserstrahlaustritten oder mit diesen synchronisiert, steuerbar ausgeführt ist.

XI. Wasserfahrzeug 1 gemäß einem der voranstehenden Ausführungsbeispiele röm. 9 bis 10, wobei mindestens ein Wasserstrahlaustritt im vorderem und mindestens ein Wasserstrahlaustritt im hinteren Schiffsbereich angeordnet ist.

XII. Wasserfahrzeug 1 gemäß einem der voranstehenden Ausführungsbeispiele röm. 9 bis 11, wobei mindestens ein Wasserstrahlaustritt in Fahrtrichtung vor dem Lateralschwerpunkt des Lateralplans des mindestens einen Rumpfes 2 und mindestens ein Wasserstrahlaustritt in Fahrtrichtung nach dem Lateralschwerpunkt des Lateralplans des mindestens einen Rumpfes 2 angeordnet ist.

XIII. Wasserfahrzeug 1 gemäß einem der voranstehenden Ausführungsbeispiele, wobei der Antrieb 6 als Hybridantrieb A ausgelegt ist.

XIV. Wasserfahrzeug 1 gemäß einem der voranstehenden Ausführungsbeispiele, wobei mindestens ein Sende- und Empfangssystem 7 dazu ausgerüstet ist, Steuersignale von einem externen Sender/Empfänger zu empfangen und zumindest Positionssignale an den externen Sender/Empfänger weiterzuleiten.

XV. Wasserfahrzeug 1 gemäß einem der voranstehenden Ausführungsbeispiele, wobei mindestens ein Sende- und Empfangssystem 7 dazu ausgerüstet ist, telemetrische Zustands- und Situationsdaten an einen externen Sender/Empfänger weiterzuleiten.

XVI. Wasserfahrzeug 1 gemäß einem der voranstehenden Ausführungsbeispiele, wobei mindestens ein Sende- und Empfangssystem 7 dazu ausgerüstet ist, von dem mindestens einen Sensor 8 stammende Sensordaten an einen externen Sender/Empfänger weiterzuleiten.

XVII. Wasserfahrzeug 1 gemäß einem der voranstehenden Ausführungsbeispiele, wobei mindestens ein Sende- und Empfangssystem 7 hard- und softwaremäßig dazu ausgerüstet ist, elektronische Positionssignale zu senden und/oder elektronische Positionssignale anderer Sender zu empfangen.

XVIII. Wasserfahrzeug 1 gemäß einem der voranstehenden Ausführungsbeispiele, wobei mindestens ein Sende- und Empfangssystem 7 ein AIS-System ist.

XIX. Wasserfahrzeug 1 gemäß einem der voranstehenden Ausführungsbeispiele, wobei mindestens eine Peilvorrichtung vorliegt, mit der ein entfernter Sender oder ein Funktelefon angepeilt werden kann.

XX. Wasserfahrzeug 1 gemäß einem der voranstehenden Ausführungsbeispiele, wobei mindestens ein Sende- und Empfangssystem 7 ein RADAR, vorzugsweise ein RADAR mit "Active Electronically Scanned Array = AESA"-Technologie, ist.

XXI. Wasserfahrzeug 1 gemäß einem der voranstehenden Ausführungsbeispiele, wobei mindestens ein optisches, vorzugsweise lagestabilisiertes, Erfassungssystem an einer exponierten Position des Wasserfahrzeuges 1 angeordnet ist.

XXII. Wasserfahrzeug 1 gemäß einem der voranstehenden Ausführungsbeispiele, wobei mindestens ein Sensorsystem 8, insbesondere das optische Erfassungssystem, lagestabilisiert ausgeführt ist.

XXIII. Wasserfahrzeug 1 gemäß einem der voranstehenden Ausführungsbeispiele, wobei mindestens ein Sensorsystem 8, insbesondere das optische Erfassungssystem, auf einem ausfahrbaren Teleskopmast 5 angeordnet ist.

XXIV. Wasserfahrzeug 1 gemäß einem der voranstehenden Ausführungsbeispiele röm. 21 bis 23, wobei das optische Erfassungssystem im Infrarotbereich arbeitet.

XXV. Wasserfahrzeug 1 gemäß dem voranstehenden Ausführungsbeispiel röm. 24, wobei an dem infrarotoptischen Erfassungssystem ein IR-Linescanner = IR-Linienkamera angeordnet ist.

XXVI. Wasserfahrzeug 1 gemäß einem der voranstehenden Ausführungsbeispiele, wobei mindestens ein Lagestabilisierungssystem im Bootsrumpf 2 verbaut ist.

XXVII. Wasserfahrzeug 1 gemäß dem voranstehenden Ausführungsbeispiel röm. 26, wobei mindestens zwei seitlich der Bootsmittellinie angeordnete Tanks mit dazwischen geschaltetem Pumpsystem verbaut sind, wobei das Pumpsystem elektronisch gesteuert aus den Daten des mindestens einen Lagesensors beginnende Rollbewegungen detektiert und diesen Bewegungen durch Umpumpen von Flüssigkeit in den Tanks entgegenwirkt.

XXVIII. Wasserfahrzeug 1 gemäß einem der voranstehenden Ausführungsbeispiele röm. 26 bis 27, wobei mindestens ein Kreiselsystem im Rumpf 2 verbaut ist, wobei der Kreisel derart angeordnet und verbaut ist, dass:

- seine Rotationsachse senkrecht zur Achse der zu stabilisierenden Rollbewegung ausgerichtet ist,
- die Lagerung des Kreisels halbkardanisch quer zur Rollachse aufgehängt ist und
- zur Dämpfung der Präzessions- und Nutationsbewegung der Kreiselachse ein Dämpfer zwischen der Kreisellagerung und dem Bootsrumpf 2 angebracht ist.

XXIX. Wasserfahrzeug 1 gemäß einem der voranstehenden Ausführungsbeispiele, wobei es zur Waren- und/oder Personenbeförderung ausgestattet ist.

XXX. Wasserfahrzeug 1 gemäß dem voranstehenden Ausführungsbeispiel röm. 29, wobei es einen, vorzugsweise gegen äußere Umweltbedingungen geschützten, Fahrgastraum mit mehreren Sitz- und/oder Liegeplätzen, aufweist.

XXXI. Wasserfahrzeug 1 gemäß dem voranstehenden Ausführungsbeispiel röm. 30, wobei es eine automatisierte, vorzugsweise vom Prozessorsystem 9 gesteuerte, Zugangs- und Ausgangskontrolle zum Fahrgastraum aufweist.

XXXII. Wasserfahrzeug 1 gemäß einem der voranstehenden Ausführungsbeispiele röm. 29 bis 31, wobei der Fahrgastraum ein, vorzugsweise vom Prozessorsystem 9 gesteuertes, audiovisuelles Informationssystem zur Informationsübermittlung zu und/oder von den beförderten Personen aufweist, welches zumindest auch die Reisedaten übermittelt.

XXXIII. Wasserfahrzeug 1 gemäß einem der voranstehenden Ausführungsbeispiele röm. 30 bis 32, wobei im Fahrgastraum ein nach innen gerichtetes, vorzugsweise vom Prozessorsystem 9 gesteuertes, Bildaufnahmesystem und/oder ein 3D-Scanner z.B. Kinect-Kamera, Laserscanner angeordnet ist, durch welches die Passagieranzahl ermittelt wird.

XXXIV. Wasserfahrzeug 1 gemäß einem der voranstehenden Ausführungsbeispiele röm. 29 bis 33, wobei ein Lagerungsraum 21 mit einem, vorzugsweise vom Prozessorsystem 9 gesteuerten, Logistiksystem mit automatisierter Warenannahme, Warenverteilung im Lagerungsraum 21 und Warenausgabe vorliegt.

XXXV. Wasserfahrzeug 1 gemäß einem der voranstehenden Ausführungsbeispiele, wobei es mit einem automatisierten Müllauffangsystem 16, 18, 19, 20 zum Auffangen, zum Aufnehmen und zur Aufbereitung oder Verarbeitung oder Weiterbehandlung von im Wasser treibendem Müll ausgestattet ist.

XXXVI. Wasserfahrzeug 1 gemäß dem voranstehenden Ausführungsbeispiel röm. 35, wobei zum Auffangen des im Wasser treibenden Mülls mindestens ein ins Wasser eintauchender Fangarm 16.1, 16.2, vorzugsweise zwei paarweise am Bug angeordnete Fangarme 16.1, 16.2, angeordnet sind, welche(r) vorzugsweise derart ausgestaltet ist/sind, dass bei Vorwärtsfahrt der eingefangene Müll zu einem Fördersystem 18 geleitet wird.

XXXVII. Wasserfahrzeug 1 gemäß dem voranstehenden Ausführungsbeispiel röm. 36, wobei das Fördersystem 18, vorzugsweise ein Kettenförderer oder ein Bandförderer oder ein Becherwerk oder eine Förderschnecke, derart ausgestaltet ist, dass es den aufgefangenen Müll ins Wasserfahrzeug 1 fördert, wobei überschüssiges Wasser abgeleitet wird.

XXXVIII. Wasserfahrzeug 1 gemäß einem der voranstehenden Ausführungsbeispiele röm. 35 bis 37, wobei dem Fördersystem 18 nachgeschaltet eine Zerkleinerungsvorrichtung 19 vorliegt, welche den aufgefangenen Müll zerkleinert.

XXXIX. Wasserfahrzeug 1 gemäß einem der voranstehenden Ausführungsbeispiele röm. 35 bis 38, wobei dem Fördersystem 18 nachgeschaltet eine Pressvorrichtung 20 vorliegt, welche den aufgefangenen Müll komprimiert und in Mülleinheiten ME portioniert.

XL. Wasserfahrzeug 1 gemäß dem voranstehenden Ausführungsbeispiel röm. 39, wobei der Pressvorrichtung 20 nachgeschaltet eine automatisierte Zwischenlagerungsvorrichtung 21, 1t, 1mt vorliegt, welche die Mülleinheiten ME lagert und gegebenenfalls auslädt.

XLI. Wasserfahrzeug 1 gemäß dem voranstehenden Ausführungsbeispiel röm. 40, wobei die automatisierte Zwischenlagerungsvorrichtung 21 derart ausgestaltet ist, dass die Mülleinheiten ME mit einer Markierung oder einem Peilsender oder einem AIS-System versehen zum späteren Aufsammeln ins Wasser ausgeladen werden.

XLII. Wasserfahrzeug 1 gemäß dem voranstehenden Ausführungsbeispiel röm. 39, wobei der Pressvorrichtung 20 nachgeschaltet eine Zwischenlagerungsvorrichtung 21 vorliegt, welche sich auf einem zusätzlich angehängten Wasserfahrzeug 1t befindet.

XLIII. Wasserfahrzeug 1 gemäß dem voranstehenden Ausführungsbeispiel röm. 41, wobei das zusätzlich angehängte Wasserfahrzeug 1ms mit einem Antrieb und automatischer Steuerung ausgestattet ist.

XLIV. Wasserfahrzeug 1 gemäß dem voranstehenden Ausführungsbeispiel röm. 41, wobei das zusätzlich angehängte Wasserfahrzeug 1t antriebslos ausgestattet ist und mit Hilfe eines weiteren Maschinenfahrzeuges 1ms angetrieben wird.

XLV. Wasserfahrzeug 1 gemäß einem der voranstehenden Ausführungsbeispiele, wobei es mindestens ein automatisch auswechselbares Antriebsenergiepaket, vorzugsweise ein Akkupack oder Treibstoffbehälter oder Gasbehälter, jeweils mit Adapteranschluss und Wechselvorrichtung zum automatischen Auswechseln, aufweist.

XLVI. Wasserfahrzeug 1 gemäß einem der voranstehenden Ausführungsbeispiele, wobei es eine Lagervorrichtung 21 für mindestens ein Antriebsenergiepaket und eine Wechselvorrichtung aufweist, welche derart ausgestaltet ist, dass sie ein automatisches Auswechseln mindestens eines Antriebspaketes eines weiteren Wasserfahrzeuges 1 gemäß einem der voranstehenden Ausführungsbeispiele im Betrieb ausführt.

XLVII. Wasserfahrzeug 1 gemäß einem der voranstehenden Ausführungsbeispiele, wobei im Prozessorsystem 9 Programmcode gespeichert ist und im Betrieb ausgeführt wird, welcher eine Fernsteuerung des Wasserfahrzeuges 1 ermöglicht, indem über terrestrischen oder satellitengestützten Funk:

XLVII.i. zur Fernsteuerung notwendige Informationen, insbesondere Positionsdaten, Maschinendaten des mindestens einen Antriebs 6, A, Daten einer optischen und/oder funktechnischen Erfassung, und/oder Sensordaten von an Bord befindlichen Sensorsystemen 8 vom Wasserfahrzeug 1 zu einer entfernten Steuerzentrale übertragen werden,

XLVII.ii. Steuerbefehle für das Wasserfahrzeug 1 empfangen und ausgeführt werden und

XLVII.iii. Auslösebefehle für an Bord befindliche Ausrüstung empfangen und ausgeführt werden.

XLVIII. Wasserfahrzeug 1 gemäß einem der voranstehenden Ausführungsbeispiele, wobei im Prozessorsystem 9 Programmcode gespeichert ist und im Betrieb ausgeführt wird, welcher eine eigenständig ausgeführte Steuerung des Wasserfahrzeuges 1 zu einem vorgegebenen Zielpunkt oder entlang eines vorgegebenen Tracks ermöglicht, wobei bei Erreichung eines Zielpunktes oder Erkennung eines vorgegebenen Ereignisses eine sattelitengestützte Funkverbindung oder eine sattelitengestützte Netzwerkverbindung zu einer Steuerzentrale aufgebaut wird.

XLIX. Wasserfahrzeug 1 gemäß einem der voranstehenden Ausführungsbeispiele, wobei im Prozessorsystem 9 Programmcode gespeichert ist und im Betrieb ausgeführt wird, welcher:

XLIX.i. unter Verwendung einer IR-Bildgebung typische Signaturen von Personen 13 im Wasser erkennt,

XLIX.ii. die Position der erkannten Signatur, zumindest relativ zum Boot, bestimmt,

XLIX.iii. das Wasserfahrzeug 1 an diese Position führt und

XLIX.iv. Bergemaßnahmen einleitet.

L. Wasserfahrzeug 1 gemäß einem der voranstehenden Ausführungsbeispiele, wobei im Prozessorsystem 9 Programmcode gespeichert ist und im Betrieb ausgeführt wird, welcher:

L.i. unter Verwendung eines AIS-Systems AIS-Notsignale von Personen 13 im Wasser erkennt,

L.ii. aus dem AIS-Notsignal die gesendete GPS-Position der Person 13 ermittelt,

L.iii. das Wasserfahrzeug 1 an diese Position führt und

L.iv. Bergemaßnahmen einleitet.

LI. Wasserfahrzeug 1 gemäß einem der voranstehenden Ausführungsbeispiele, wobei im Prozessorsystem 9 Programmcode gespeichert ist und im Betrieb ausgeführt wird, welcher:

LI.i. unter Verwendung eines Homing-Systems für PLBs PLB = personal locator beacon PLB-Signale empfängt, erkennt und auswertet,

LI.ii. aus dem PLB-Signal die relative Richtung zum Sender des PLB-Signals ermittelt,

LI.iii. das Wasserfahrzeug 1 in diese Richtung bis zum PLB-Sender führt und

LI.iv. Bergemaßnahmen einleitet.

LII. Wasserfahrzeug 1 gemäß dem voranstehenden Ausführungsbeispiel röm. 33, wobei im Prozessorsystem 9 Programmcode gespeichert ist und im Betrieb ausgeführt wird, welcher:

LII.i. das Wasserfahrzeug 1 derart steuert und mit mehreren Kreuzpeilungen die Position des angepeilten PLBs bestimmt,

LII.ii. das Wasserfahrzeug 1 auf die so ermittelte Position führt und

LII.iii. Bergemaßnahmen einleitet.

LIII. Wasserfahrzeug 1 gemäß einem der voranstehenden Ausführungsbeispiele, wobei im Prozessorsystem 9 Programmcode gespeichert ist und im Betrieb ausgeführt wird, welcher:

LIII.i. zunächst über funktechnische Maßnahmen die Position einer zu bergenden Person 13 grob bestimmt,

LIII.ii. das Wasserfahrzeug 1 automatisch in die Nähe der so bestimmten Position führt,

LIII.iii. dort unter Verwendung einer IR-Bildgebung typische Signaturen von Personen 13 im Wasser sucht und nach deren Erkennung die genaue Position der erkannten Signatur, zumindest relativ zum Boot, bestimmt,

LIII.iv. das Wasserfahrzeug 1 an diese Position heran führt und

LIII.v. in unmittelbarer Nachbarschaft der gefundenen Person 13 Bergemaßnahmen einleitet.

Bezugszeichenliste

| | |
|---|---|
| 1 | Wasserfahrzeug |
| 1m | Wasserfahrzeug mit Antriebsmaschine |
| 1ms | Wasserfahrzeug mit Antriebsmaschine und Sammelvorrichtung |
| 1mst | Wasserfahrzeug mit Antriebsmaschine, Sammelvorrichtung und Transportkompartment |
| 1mt | Wasserfahrzeug mit Antriebsmaschine und Transportkompartment |
| 1t | Wasserfahrzeug mit Transportkompartment ohne Antriebsmaschine / Anhänger |
| 2 | Rumpf |
| 3 | Schlauchbootwulst |
| 4 | Turmaufbauten |
| 5 | Teleskopmast |
| 6 | Jetantrieb |
| 7 | Sende- und Empfangssysteme |
| 8 | Sensorsysteme |
| 9 | Prozessorsystem |
| 9.1 | Speicher |
| 10 | Antriebssensoren |
| 11 | Rettungsinsel |
| 12 | Basisstation |
| 13 | Personen |
| 14 | Flugzeug als Relaisstation |
| 15 | Satellit als Relaisstation |
| 16 | Rechen |
| 16.1, 16.2 | schwenkbare Rechenarme |
| 17.1, 17.2 | Teleskopvorrichtung |
| 18 | Fördervorrichtung |
| 19 | Schredder, Zerkleinerungsvorrichtung |
| 20 | Presse |
| 21 | Transportkompartment / Lagerraum |
| 22 | Ent- und Beladevorrichtung, Kran |
| 23 | Transportvorrichtung |
| 24 | Kopplungsadapter |
| 25 | Kopplungsarm |
| A | Antrieb / Hybridantrieb |
| H | Hafen |
| E | Entladestelle |
| ME | Mülleinheit |
| S | zu säuberndes Seegebiet |
| T | Track |
| W | Warteposition |

**Patentansprüche**

1. Wasserfahrzeug (1), aufweisend:

    1.1. einen oder mehrere untereinander verbundene Rümpfe (2) mit Decksaufbauten, wobei zumindest der mindestens eine Rumpf (2) überwiegend aus einem Faserverbundwerkstoff aufgebaut ist,
    1.2. einen Antrieb (6, A), vorzugsweise einen Hybridantrieb, zur Erzeugung eines Vortriebs auf dem Wasser,
    1.3. ein Sende- und Empfangssystem (7) zum verschlüsselten Datenaustausch mit einer entfernten Gegenstation,
    1.4. ein Sensorsystem (8), das mit dem Prozessorsystem (9) zusammenwirkt, um eine unbemannte Fahrt des Wasserfahrzeuges (1) auf See zu ermöglichen,
    1.5. und ein Prozessorsystem (9) mit Speicher (9.1) und darin gespeichertem Programmcode, welcher im Betrieb die Steuerung auf See ausführt, wobei das Prozessorsystem (9) eine Datenverbindung zu dem vorgenannten mindestens einen Sende- und Empfangssystem (7) und zu dem mindestens einen Sensorsystem (8) aufweist.

2. Wasserfahrzeug (1) gemäß dem voranstehenden Patentanspruch 1, **dadurch gekennzeichnet, dass** es mit einem automatisierten Müllauffangsystem (16, 18, 19, 20) zum Auffangen, zum Aufnehmen und zur Aufbereitung oder Verarbeitung oder Weiterbehandlung von im Wasser treibendem Müll ausgestattet ist.

3. Wasserfahrzeug (1) gemäß dem voranstehenden Patentanspruch, **dadurch gekennzeichnet, dass** zum Auffangen des im Wasser treibenden Mülls mindestens ein ins Wasser eintauchender Fangarm (16.1, 16.2), vorzugsweise zwei paarweise am Bug angeordnete Fangarme (16.1, 16.2), angeordnet sind, welche(r) vorzugsweise derart ausgestaltet ist/sind, dass bei Vorwärtsfahrt der eingefangene Müll zu einem Fördersystem (18) geleitet wird.

4. Wasserfahrzeug (1) gemäß dem voranstehenden Patentanspruch, **dadurch gekennzeichnet, dass** das Fördersystem (18), vorzugsweise ein Kettenförderer oder ein Bandförderer oder ein Becherwerk oder eine Förderschnecke, derart ausgestaltet ist, dass es den aufgefangenen Müll ins Wasserfahrzeug fördert, wobei überschüssiges Wasser abgeleitet wird.

5. Wasserfahrzeug (1) gemäß einem der voranstehenden Patentansprüche 3 bis 4, **dadurch gekennzeichnet, dass** dem Fördersystem (18) nachgeschaltet eine Zerkleinerungsvorrichtung (19) vorliegt, welche den aufgefangenen Müll zerkleinert.

6. Wasserfahrzeug (1) gemäß einem der voranstehenden Patentansprüche 3 bis 5, **dadurch gekennzeichnet, dass** dem Fördersystem (18) nachgeschaltet eine Pressvorrichtung (20) vorliegt, welche den aufgefangenen Müll komprimiert und in Mülleinheiten (ME) portioniert.

7. Wasserfahrzeug (1) gemäß dem voranstehenden Patentanspruch **dadurch gekennzeichnet, dass** der Pressvorrichtung (20) nachgeschaltet eine automatisierte Zwischenlagerungsvorrichtung (21, 1t, 1mt) vorliegt, welche die Mülleinheiten (ME) lagert und gegebenenfalls auslädt.

8. Wasserfahrzeug (1) gemäß dem voranstehenden Patentanspruch **dadurch gekennzeichnet, dass** die automatisierte Zwischenlagerungsvorrichtung (21) derart ausgestaltet ist, dass die Mülleinheiten (ME) mit einer Markierung oder einem Peilsender oder einem AIS-System versehen zum späteren Aufsammeln ins Wasser ausgeladen werden.

9. Wasserfahrzeug (1) gemäß dem voranstehenden Patentanspruch **dadurch gekennzeichnet, dass** der Pressvorrichtung (20) nachgeschaltet eine Zwischenlagerungsvorrichtung (21) vorliegt, welche sich auf einem zusätzlich angehängten Wasserfahrzeug (1t) befindet.

10. Wasserfahrzeug (1) gemäß dem voranstehenden Patentanspruch, **dadurch gekennzeichnet, dass** das zusätzlich angehängte Wasserfahrzeug (1ms) mit einem Antrieb und automatischer Steuerung ausgestattet ist.

11. Wasserfahrzeug (1) gemäß dem voranstehenden Patentanspruch, **dadurch gekennzeichnet, dass** das zusätzlich angehängte Wasserfahrzeug (1t) antriebslos ausgestattet ist und mit Hilfe eines weiteren Maschinenfahrzeuges (1ms) angetrieben wird.

12. Wasserfahrzeug (1) gemäß einem der voranstehenden Patentansprüche, **dadurch gekennzeichnet, dass** es mindestens ein automatisch auswechselbares Antriebsenergiepaket, vorzugsweise ein Akkupack oder Treibstoffbehälter oder Gasbehälter, jeweils mit Adapteranschluss und Wechselvorrichtung zum automatischen Auswechseln, aufweist.

**13.** Wasserfahrzeug (1) gemäß einem der voranstehenden Patentansprüche, **dadurch gekennzeichnet, dass** es eine Lagervorrichtung für mindestens ein Antriebsenergiepaket und eine Wechselvorrichtung aufweist, welche derart ausgestaltet ist, dass sie ein automatisches Auswechseln mindestens eines Antriebspaketes eines weiteren Wasserfahrzeuges gemäß eines der voranstehenden Ansprüche im Betrieb ausführt.

**14.** Wasserfahrzeug (1) gemäß einem der voranstehenden Ausführungsbeispiele, **dadurch gekennzeichnet, dass** mindestens ein ausfahrbarer Teleskopmast 5 mit einer lagestabilisierten Plattform mit mindestens einem Sensor (8), insbesondere einem optischen Erfassungssystem, auf dem Wasserfahrzeug (1) angeordnet ist

FIG 1

FIG 2

## FIG 3

FIG 4

FIG 5

12

<20NM

14

<200NM

1

>200NM

15

1

FIG 6

FIG 7

FIG 8

# FIG 9